# EUROPEAN PATENT SPECIFICATION

(11) **EP 2 900 759 B1**
(45) Date of publication and mention of the grant of the patent: **13.07.2016**
(21) Application number: 13802436.9
(22) Date of filing: 24.09.2013
(51) Int. Cl.: C08L 77/06, C08L 77/00, C08L 71/12, C08L 79/08, C08L 83/10, C08L 83/12, C08K 5/5313

(54) **FLAME-RETARDANT POLYMER COMPOSITION AND ARTICLE**
FLAMMHEMMENDE POLYMERZUSAMMENSETZUNG UND ARTIKEL
COMPOSITION POLYMÈRE RETARDATRICE DE FLAMME ET ARTICLE

(30) Priority: 25.09.2012 US 201213626321
(43) Date of publication of application: 05.08.2015
(73) Proprietor: SABIC Global Technologies B.V., 4612 PX Bergen op Zoom (NL)
(72) Inventor: GRCEV, Snezana, NL-4615 NE Bergen op Zoom (NL)
(74) Representative: Lang, Johannes
(86) International application number: PCT/IB2013/058824
(87) International publication number: WO 2014/049524

(56) References cited:
- EP-A2- 1 550 698
- WO-A1-2008/157034
- WO-A2-2011/087586
- US-A1- 2008 223 602

## Description

### BACKGROUND OF THE INVENTION

Poly(phenylene ether) is a type of plastic known for its excellent water resistance, dimensional stability, and inherent flame retardancy. Properties such as strength, stiffness, chemical resistance, and heat resistance can be tailored by blending it with various other plastics in order to meet the requirements of a wide variety of consumer products, for example, plumbing fixtures, electrical boxes, automotive parts, and insulation for wire and cable.

Blends of poly(phenylene ether) with polyamide and polyimide are known. See, for example, Japanese Patent Application Publication No. JP10007900 A of Takatani, describing such a blend in which poly(phenylene ether) and polyimide are dispersed in a continuous polyamide phase. The Takatani compositions provide improved compatibility of the poly(phenylene ether) and polyimide, but their flame retardancy and tensile modulus are inadequate for some applications, such as photovoltaic junction boxes and connectors, and seats in mass transit vehicles. There remains a desire for blends of poly(phenylene ether), polyamide, and polyimide exhibiting improved flame retardancy and improved tensile modulus.

### BRIEF SUMMARY OF EMBODIMENTS OF THE INVENTION

One embodiment is a composition comprising the product of melt blending: 40 to 73 weight percent polyamide; 20 to 50 weight percent acid-functionalized poly(phenylene ether); 5 to 40 weight percent polyimide-polysiloxane block copolymer; and 2 to 15 weight percent metal dialkylphosphinate; wherein all weight percents are based on the total weight of the composition.

Another embodiment is a composition comprising the product of melt blending: 42 to 52 weight percent polyamide-6,6; 28 to 38 weight percent of an acid-functionalized poly(phenylene ether) selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof; 5 to 15 weight percent polyimide-polysiloxane block copolymer; wherein the polyimide-polysiloxane block copolymer comprises a polysiloxane block having the structure 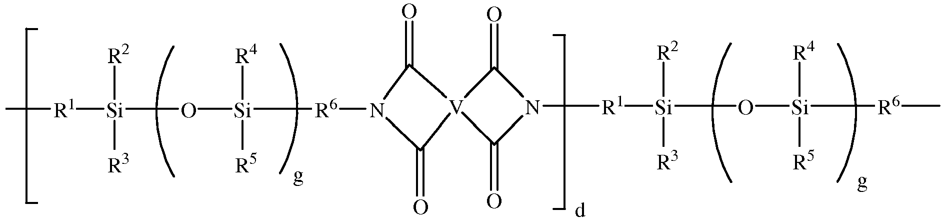 and a polyimide block having the structure 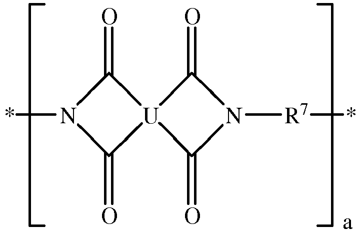 wherein R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 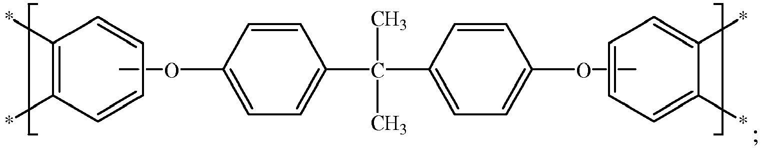 g is independently at each occurrence 5 to 15; d is 2 to 20; and a is 10 to 1,000; and 3 to 10 weight percent metal dialkylphosphinate; wherein all weight percents are based on the total weight of the composition.

Another embodiment is an article comprising a composition comprising the product of melt blending: 40 to 73 weight percent polyamide; 20 to 50 weight percent acid-functionalized poly(phenylene ether); 5 to 40 weight percent polyimide-polysiloxane block copolymer; and 2 to 15 weight percent metal dialkylphosphinate; wherein all weight percents are based on the total weight of the composition.

These and other embodiments are described in detail below.

### DETAILED DESCRIPTION OF THE INVENTION

The present composition is a blend of polyamide, acid-functionalized poly(phenylene ether), and polyimide-polysiloxane block copolymer that exhibits improved flame retardancy and improved tensile modulus. Thus, one embodiment is a composition comprising the product of melt blending: 40 to 73 weight percent polyamide; 20 to 50 weight percent acid-functionalized poly(phenylene ether); 5 to 40 weight percent polyimide-polysiloxane block copolymer; and 2 to 15 weight percent metal dialkylphosphinate; wherein all weight percents are based on the total weight of the composition.

The components melt blended to form the composition include a polyamide. In some embodiments, the polyamide comprises polyamide-6, polyamide-6,6, polyamide-4,6, polyamide-11, polyamide-12, polyamide-6,10, polyamide-6,12, polyamide 6/6,6, polyamide-6/6,12, polyamide MXD,6 (where MXD is m-xylylene diamine), polyamide-6,T, polyamide-6,1, polyamide-6/6,T, polyamide-6/6,I, polyamide-6,6/6,T, polyamide-6,6/6,1, polyamide-6/6,T/6,I, polyamide-6,6/6,T/6,1, polyamide-6/12/6,T, polyamide-6,6/12/6,T, polyamide-6/12/6,1, polyamide-6,6/12/6,1, or a combination thereof. In some embodiments, the polyamide comprises polyamide-6, polyamide-6,6, or a combination thereof. In some embodiments, the polyamide comprises polyamide-6.

In some embodiments, the polyamide has a relative viscosity of 100 to 150 measured at 23°C according to ASTM D789-07 in 90% formic acid. In some embodiments, the polyamide has an amine end group concentration of less than 100 microequivalents amine end group per gram of polyamide. The amine end group concentration can be 20 to 100 microequivalents per gram, specifically 30 to 80 microequivalents per gram, more specifically 40 to 70 microequivalents per gram. Amine end group content can be determined by dissolving the polyamide in a suitable solvent and titrating with 0.01 Normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample. Methods for the preparation of polyamides are known, and many polyamides are commercially available.

The polyamide is used in an amount of 40 to 73 weight percent, based on the total weight of the composition (which is equivalent to the total weight of melt blended components). Within this range, the polyamide amount can be 41 to 65 weight percent, specifically 42 to 55 weight percent, more specifically 42 to 52 weight percent.

In addition to the polyamide, the components melt blended to form the composition include an acid-functionalized poly(phenylene ether). The acid-functionalized poly(phenylene ether) is the product of melt blending a poly(phenylene ether) and an acid functionalizing agent that contains a carboxylic acid and/or a carboxylic acid anhydride, and an aliphatic carbon-carbon double bond or triple bond. Poly(phenylene ether)s suitable to prepare the acid-functionalized poly(phenylene ether) include those comprising repeating structural units having the formula 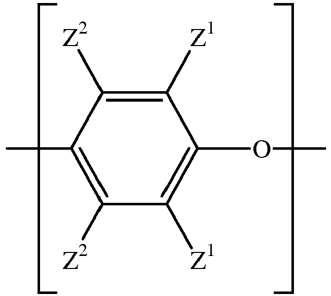 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) used to form the acid-functionalized poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In some embodiments, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 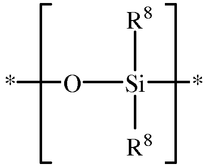 wherein each occurrence of R⁸ is independently hydrogen, C₁-C₁₂ hydrocarbyl or C₁-C₁₂ halohydrocarbyl; and two terminal units having the structure 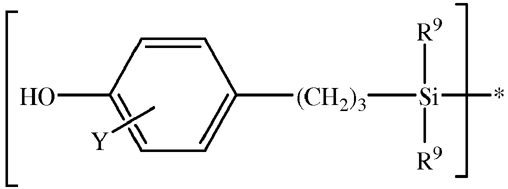 wherein Y is hydrogen, C₁-C₁₂ hydrocarbyl, C₁-C₁₂ hydrocarbyloxy, or halogen, and wherein each occurrence of R⁹ is independently hydrogen, C₁-C₁₂ hydrocarbyl or C₁-C₁₂ halohydrocarbyl. In a very specific embodiment, each occurrence of R⁸ and R⁹ is methyl, and Y is methoxy.

In some embodiments, the monohydric phenol comprises 2,6-dimethylphenol, and the hydroxyaryl-terminated polysiloxane has the structure 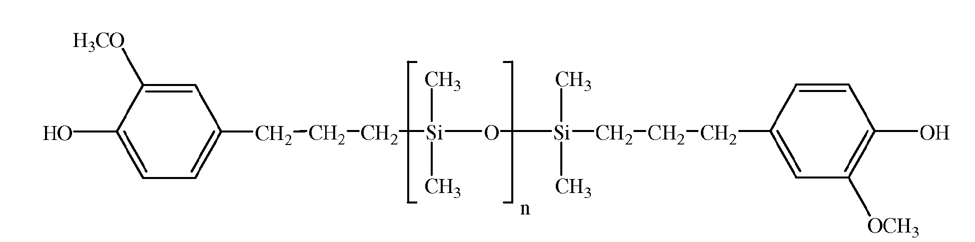 wherein n is, on average, 5 to 100.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent No. 8,017,697 to Carrillo et al., and U.S. Patent Application Serial No. 13/169,137 of Carrillo et al., filed June 27, 2011.

In some embodiments, the poly(phenylene ether) used to form the acid-functionalized poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, more specifically 0.35 to 0.5 deciliter per gram, even more specifically 0.4 to 0.5 deciliter per gram. In the reaction of the poly(phenylene ether) with the acid functionalizing agent, the intrinsic viscosity of the poly(phenylene ether) starting material is equivalent to that of the acid-functionalized poly(phenylene ether) product. Thus, the intrinsic viscosity ranges recited in this paragraph apply to the acid-functionalized poly(phenylene ether) as well as the poly(phenylene ether).

As mentioned above, the acid-functionalized poly(phenylene ether) is the product of melt blending a poly(phenylene ether) and an acid functionalizing agent that contains a carboxylic acid and/or a carboxylic acid anhydride, and an aliphatic carbon-carbon double bond or triple bond. In some embodiments, the acid functionalizing agent comprises citric acid, fumaric acid, maleic acid, maleic anhydride, or a combination thereof. In some embodiments, the acid-functionalized poly(phenylene ether) is the product of melt blending 95 to 99.5 parts by weight of a poly(phenylene ether) with 0.5 to 5 parts by weight of an acid functionalizing agent selected from the group consisting of citric acid, fumaric acid, maleic acid, maleic anhydride, and combinations thereof, wherein the sum of the poly(phenylene ether) and the acid functionalizing agent is 100 parts by weight. Within the range of 95 to 99.5 parts by weight, the amount of poly(phenylene ether) can be 96 to 99 parts by weight, specifically 97 to 98.5 parts by weight. Within the range of 0.5 to 5 parts by weight, the acid functionalizing agent amount can be 1 to 4 parts by weight, specifically 1.5 to 3 parts by weight.

In some embodiments, the poly(phenylene ether) used to form the acid-functionalized poly(phenylene ether) comprises a homopolymer or copolymer of monomers selected from the group consisting of 2,6-dimethylphenol, 2,3,6-trimethylphenol, and combinations thereof. In some embodiments, the poly(phenylene ether) used to form the acid-functionalized poly(phenylene ether) comprises a poly(phenylene ether)-polysiloxane block copolymer. In these embodiments, the acid-functionalized poly(phenylene ether) can, for example, contribute 0.4 to 4 weight percent, specifically 0.8 to 3 weight percent, more specifically 1.2 to 2 weight percent, of siloxane groups to the composition as a whole.

The acid-functionalized poly(phenylene ether) is used in an amount of 20 to 50 weight percent, based on the total weight of the composition. Within this range, the acid-functionalized poly(phenylene ether) amount can be 24 to 44 weight percent, specifically 28 to 38 weight percent.

In addition to the polyamide and the acid-functionalized poly(phenylene ether), the components melt blended to form the composition include a polyimide-polysiloxane block copolymer. The polyimide-polysiloxane block copolymer comprises at least one polyimide block and at least one polysiloxane block. In some embodiments, the polyimide-polysiloxane block copolymer has a polysiloxane content of 1 to 40 weight percent and a polyimide content of 60 to 99 weight percent, based on the total weight of the polyimide-polysiloxane block copolymer.

In some embodiments, the polyimide-polysiloxane block copolymer comprises a polyimide block and a polysiloxane block; wherein the polysiloxane block has the structure 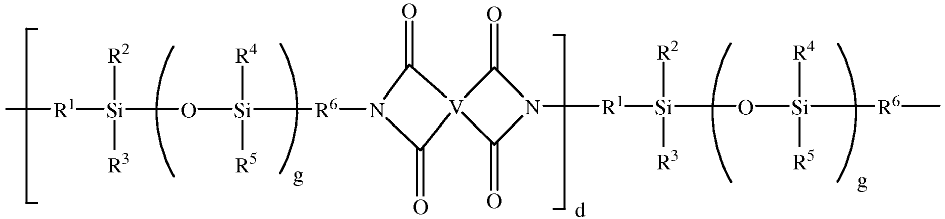 wherein R¹ and R⁶ are independently at each occurrence divalent groups selected from the group consisting of substituted or unsubstituted, saturated, unsaturated, or aromatic divalent monocyclic groups having 5 to 30 carbon atoms, substituted or unsubstituted, saturated, unsaturated, or aromatic divalent polycyclic groups having 5 to 30 carbon atoms, substituted or unsubstituted alkylene groups having 1 to 30 carbon atoms, and substituted or unsubstituted alkenylene groups having 2 to 30 carbon atoms; R², R³, R⁴, and R⁵ are independently at each occurrence monovalent groups selected from the group consisting of substituted or unsubstituted, saturated, unsaturated, or aromatic monovalent monocyclic groups having 5 to 30 carbon atoms, substituted or unsubstituted, saturated, unsaturated, or aromatic monovalent polycyclic groups having 5 to 30 carbon atoms, substituted or unsubstituted alkyl groups having 1 to 30 carbon atoms, and substituted or unsubstituted alkenyl groups having 2 to 30 carbon atoms; V is a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, substituted or unsubstituted alkenyl groups having 2 to 30 carbon atoms, and combinations thereof; each occurrence of g is independently 2 to 30; and d is 2 to 20; and wherein the polyimide block has the structure 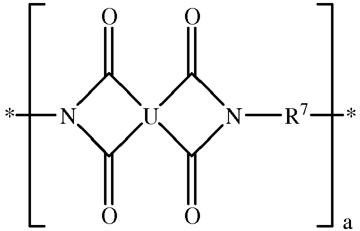 wherein a is 10 to 1,000; U is independently at each occurrence a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, and substituted or unsubstituted alkenyl groups having 2 to 30 carbon atoms; and R⁷ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 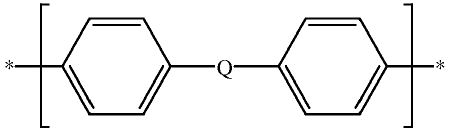 wherein Q is selected from the group consisting of -O-, -S-, -C(O)-, -S(O)₂-, -S(O)-, and -C_{y}H_{2y}- where y is 1 to 20.

In some embodiments, R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 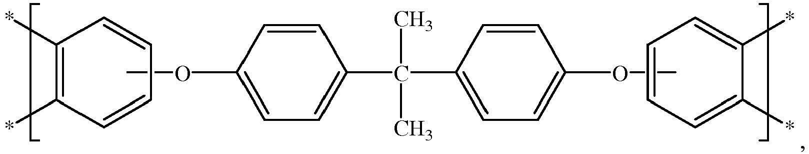 and g is independently at each occurrence 5 to 15.

Methods of forming polyimide-polysiloxane block copolymers are known and described, for example, in U.S. Patent Application Publication No. US 2008/0223602 A1 of Gallucci et al., and U.S. Patent No. 8,013,251 to Bhandari et al. Polyimide-polysiloxane block copolymers are also commercially available as, for example, SILTEM Resins STM1500, STM1600, and STM1700 from Sabic Innovative Plastics.

Polyimide-polysiloxane block copolymers having extended siloxane blocks are made by forming an extended siloxane oligomer and then using the extended siloxane oligomer to make the block copolymer. The extended siloxane oligomer is made by reacting a diaminosiloxane and a dianhydride wherein either the diaminosiloxane or the dianhydride is present in 10 to 50% molar excess, specifically 10 to 25% molar excess. "Molar excess" as used in this context is defined as being in excess of the other reactant. For example, if the diaminosiloxane is present in 10% molar excess then for 100 moles of dianhydride are present there are 110 moles of diaminosiloxane.

The diaminosiloxane can have the formula 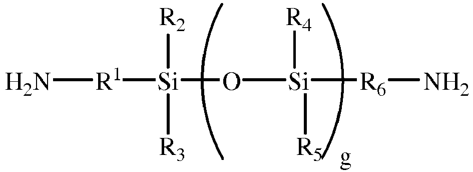 wherein R¹-R⁶ and g are defined as above. In one embodiment R², R³, R⁴, and R⁵ are methyl groups, and R¹ and R⁶ are independently at each occurrence alkylene groups having 2 to 6 carbon atoms. The synthesis of diaminosiloxanes is known in the art and is taught, for example, in U.S. Patent Nos. 3,185,719 to Prober and 4,808,686 to Cella et al.

Dianhydrides useful for forming the extended siloxane oligomer can have the formula 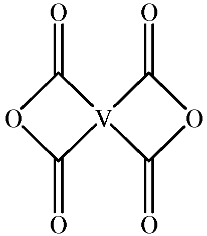 wherein V is a tetravalent linker as described above. Suitable substitutions and/or linkers include carbocyclic groups, aryl groups, ethers, sulfones, sulfides amides, esters, and combinations comprising at least one of the foregoing. Exemplary linkers include tetravalent aromatic radicals such as 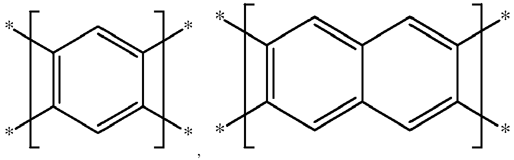 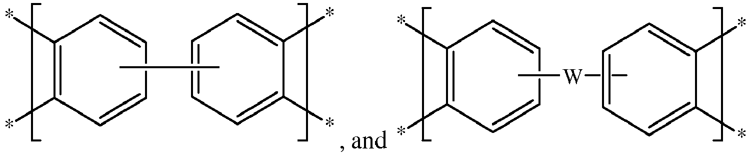 wherein W is a divalent moiety such as -O-, -S-, -C(O)-, -SO₂-, -SO-, -C_{y}H_{2y}- (y being an integer of 1 to 20) and halogenated derivatives thereof, including perfluoroalkylene groups, or a group of the Formula -O-Z-O- wherein the divalent bonds of the -O- or the -O-Z-O- group are in the 3,3', 3,4', 4,3', or the 4,4' positions of the adjacent phthalic anhydride groups, and wherein Z includes divalent moieties of the formula 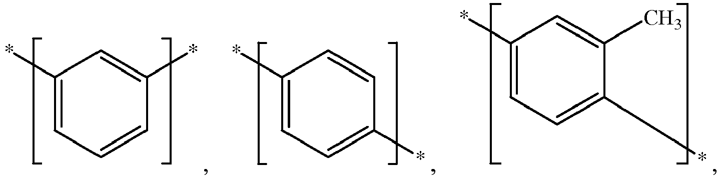 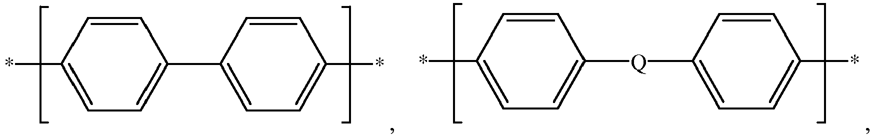 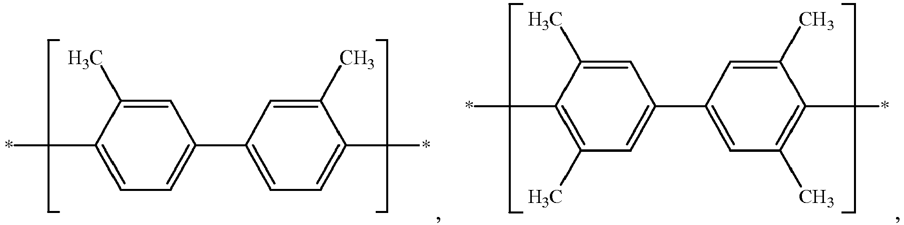 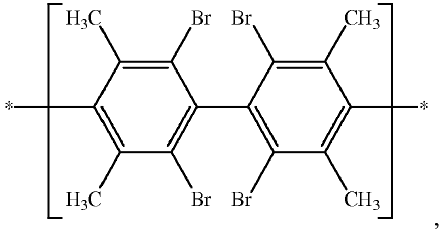 and 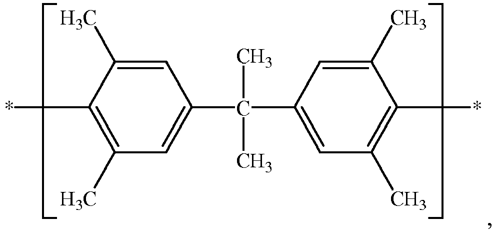 wherein Q is divalent moiety that can be -O-, -S-, -C(O)-, -SO₂-, -SO-, -C_{y}H_{2y}- wherein y is 1 to 8, or -CₚH_{q}Fᵣ- where p is from 1 to 8 and q is 0 to 15 and r is 1 to 16 and q + r = 2p. In some embodiments the tetravalent linker V is free of halogens.

In some embodiments, the dianhydride comprises an aromatic bis(ether anhydride), and the polyimide is a polyetherimide. Examples of specific aromatic bis(ether anhydride)s are disclosed, for example, in U.S. Patent Nos. 3,972,902 to Heath et al. and 4,455,410 to Giles. Illustrative examples of aromatic bis(ether anhydride)s include 2,2-bis[4-(3,4-dicarboxyphenoxy)phenyl]propane dianhydride, 4,4'-bis(3,4-dicarboxyphenoxy)diphenyl ether dianhydride, 4,4'-bis(3,4-dicarboxyphenoxy)diphenyl sulfide dianhydride, 4,4'-bis(3,4-dicarboxyphenoxy)benzophenone dianhydride, 4,4'-bis(3,4-dicarboxyphenoxy)diphenyl sulfone dianhydride, 2,2-bis[4-(2,3-dicarboxyphenoxy)phenyl]propane dianhydride, 4,4'-bis(2,3-dicarboxyphenoxy)diphenyl ether dianhydride, 4,4'-bis(2,3-dicarboxyphenoxy)diphenyl sulfide dianhydride, 4,4'-bis(2,3-dicarboxyphenoxy)benzophenone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl-2,2-propane dianhydride, 4-(2,3-dicarboxyphenoxy)-4'-(3,4-dicarboxyphenoxy)diphenyl ether dianhydride, 4-(2,3-dicarboxyphenoxy)-4'-(3,4-dicarboxyphenoxy)diphenyl sulfide dianhydride, 4-(2,3-dicarboxyphenoxy)-4'-(3,4-dicarboxyphenoxy) benzophenone dianhydride, 4-(2,3-dicarboxyphenoxy)-4'-(3,4-dicarboxyphenoxy) diphenyl sulfone dianhydride, and mixtures thereof. The bis(ether anhydride)s can be prepared by the hydrolysis, followed by dehydration, of the reaction product of a nitro substituted phenyl dinitrile with a metal salt of dihydric phenol compound in the presence of a dipolar, aprotic solvent.

A chemical equivalent to a dianhydride can also be used. Examples of dianhydride chemical equivalents include tetra-functional carboxylic acids capable of forming a dianhydride and ester or partial ester derivatives of the tetra functional carboxylic acids. Mixed anhydride acids or anhydride esters can also be used as an equivalent to the dianhydride. As used throughout the specification and claims "dianhydride" will refer to dianhydrides and their chemical equivalents.

The diaminosiloxane and dianhydride can be reacted in a suitable solvent, such as a halogenated aromatic solvent, for example ortho-dichlorobenzene, optionally in the presence of a polymerization catalyst such as an alkali metal aryl phosphinate or alkali metal aryl phosphonate, for example, sodium phenyl phosphonate. In some instances the solvent will be an aprotic polar solvent with a molecular weight less than or equal to 500 to facilitate removal of the solvent from the polymer. The temperature of the reaction can be greater than or equal to 100°C and the reaction can run under azeotropic conditions to remove the water formed by the reaction. In some embodiments the polyimide-polysiloxane block copolymer has a residual solvent content less than or equal to 500 parts by weight of solvent per million parts by weight of polymer (ppm), specifically less than or equal to 250 ppm, even more specifically less than or equal to 100 ppm. Residual solvent content can be determined by a number of methods including, for example, gas chromatography.

The diaminosiloxane and dianhydride can be reacted in a suitable solvent, such as a halogenated aromatic solvent, for example ortho-dichlorobenzene, optionally in the presence of a polymerization catalyst such as an alkali metal aryl phosphinate or alkali metal aryl phosphonate, for example, sodium phenyl phosphonate. In some instances the solvent will be an aprotic polar solvent with a molecular weight less than or equal to 500 to facilitate removal of the solvent from the polymer. The temperature of the reaction can be greater than or equal to 100°C and the reaction can run under azeotropic conditions to remove the water formed by the reaction. In some embodiments the polyimide-polysiloxane block copolymer has a residual solvent content less than or equal to 500 parts by weight of solvent per million parts by weight of polymer (ppm), specifically less than or equal to 250 ppm, even more specifically less than or equal to 100 ppm. Residual solvent content can be determined by a number of methods including, for example, gas chromatography.

The stoichiometric ratio of the diaminosiloxane and dianhydride in the reaction to form the siloxane oligomer determines the degree of chain extension in the extended siloxane oligomer (i.e., d in the formula 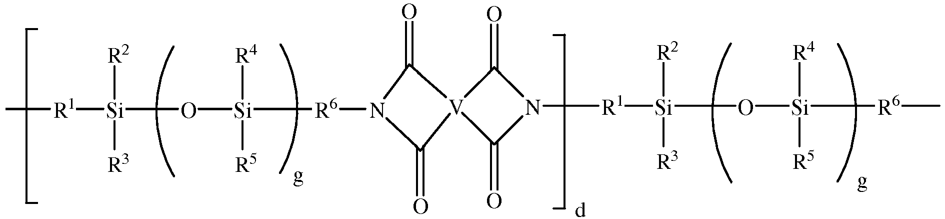 plus one). For example, a molar ratio of 4 diaminosiloxane to 6 dianhydride will yield a siloxane oligomer with a value for d+1 of 4. As understood by one of ordinary skill in the art, d+1 is an average value for the siloxane containing portion of the block copolymer and the value for d+1 is generally rounded to the nearest whole number. For example a value for d+1 of 4 includes values of 3.5 to 4.5. In some embodiments d is less than or equal to 50, specifically less than or equal to 25, more specifically less than or equal to 10.

The extended siloxane oligomers described above are further reacted with non-siloxane diamines and additional dianhydrides to make the polyimide-polysiloxane block copolymer. The overall molar ratio of the total amount of dianhydride and diamine (the total of both the siloxane and non-siloxane containing diamines) used to make the polyimide-polysiloxane block copolymer should be about equal so that the copolymer can polymerize to a high molecule weight. In some embodiments the ratio of total diamine to total dianhydride is 0.9 to 1.1, specifically 0.95 to 1.05. In some embodiments the polyimide-polysiloxane block copolymer will have a number average molecular weight (Mn) of 5,000 to 50,000 Daltons, specifically 10,000 to 30,000 Daltons, as determined using gel permeation chromatography and polystyrene standards. The additional dianhydride can be the same or different from the dianhydride used to form the extended siloxane oligomer.

The non-siloxane polyimide block has the general formula 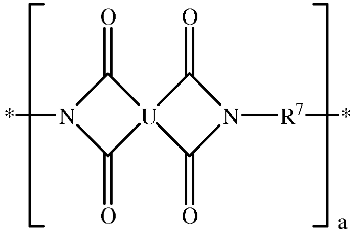 wherein a is more than 1, typically 10 to 1,000 or more, and can specifically be 10 to 500; R⁷ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 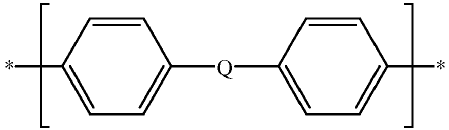 wherein Q is selected from the group consisting of -O-, -S-, -C(O)-, -S(O)₂-, -S(O)-, and -C_{y}H_{2y}- where y is 1 to 20; and U is a tetravalent linker without limitation, as long as the linker does not impede synthesis of the polyimide oligomer. Suitable linkers include: (a) substituted or unsubstituted, saturated, unsaturated or aromatic monocyclic and polycyclic groups having 5 to 50 carbon atoms, (b) substituted or unsubstituted, linear or branched, saturated or unsaturated alkyl groups having 1 to 30 carbon atoms; and combinations comprising at least one of the foregoing linkers. Suitable substitutions and/or linkers include carbocyclic groups, aryl groups, ethers, sulfones, sulfides amides, esters, and combinations comprising at least one of the foregoing. Exemplary linkers include tetravalent aromatic radicals of the formula 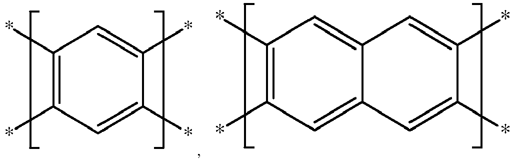 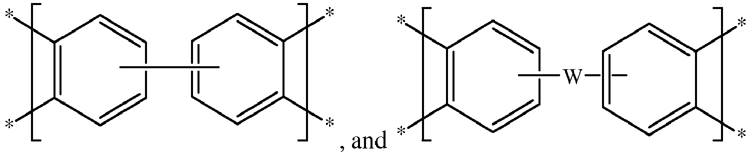 wherein W is a divalent moiety such as -O-, -S-, -C(O)-, -SO₂-, -SO-, -C_{y}H_{2y}- (y being an integer of 1 to 20), and halogenated derivatives thereof, including perfluoroalkylene groups, or a group of the Formula -O-Z-O- wherein the divalent bonds of the -O- or the -O-Z-O-group are in the 3,3', 3,4', 4,3', or the 4,4' positions, and wherein Z includes divalent moieties of the formula 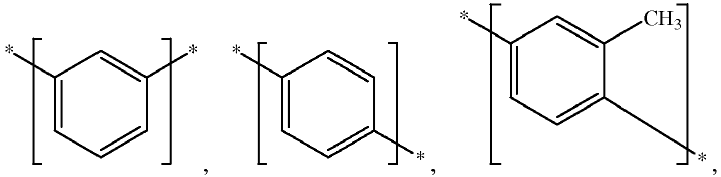 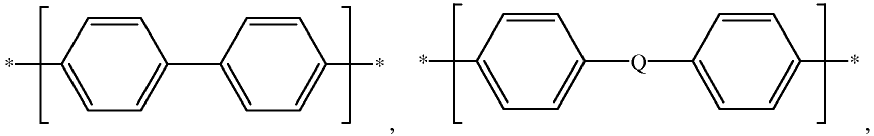 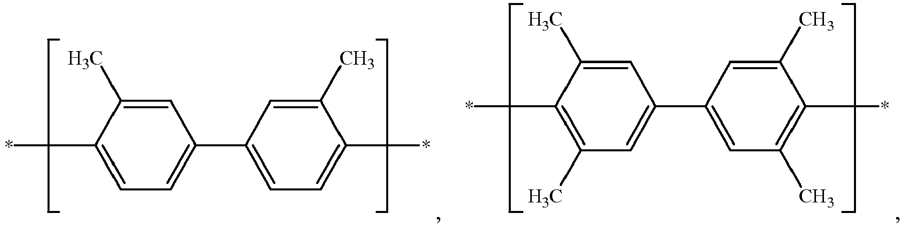 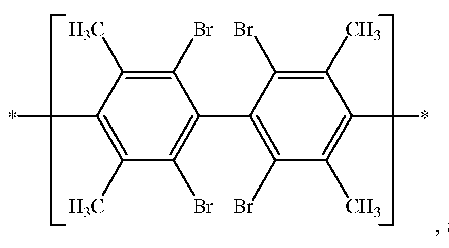 and 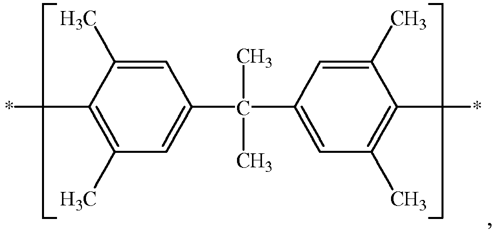 wherein Q is divalent moiety that can be -O-, -S-, -C(O)-, -SO₂-, -SO-, -C_{y}H_{2y}- wherein y is 1 to 8, or -CₚH_{q}Fᵣ- where p is from 1 to 8 and q is 0 to 15 and r is 1 to 16 and q + r = 2p. In some embodiments the tetravalent linker U is free of halogens. In some embodiments V in the polysiloxane block and U in the polyimide block are the same. In some embodiments V and U are different.

In some embodiments, the non-siloxane polyimide blocks comprise a polyetherimide block. Polyetherimide blocks comprise repeating units of formula 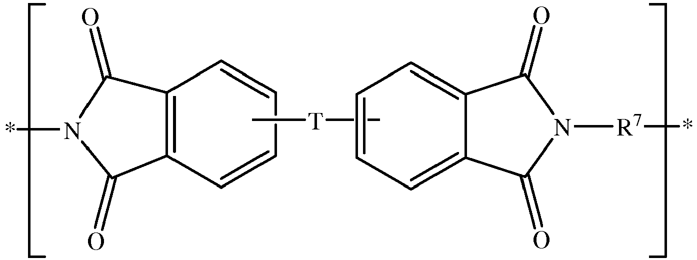 wherein T is -O- or a group of the Formula -O-Z-O- wherein the divalent bonds of the -O- or the -O-Z-O- group are in the 3,3', 3,4', 4,3', or the 4,4' positions of the phthalimide groups, and wherein Z and R⁷ are defined as described above. In some embodiments, each occurrence of R⁷ is independently p-phenylene or m-phenylene, and T is a divalent moiety of the formula 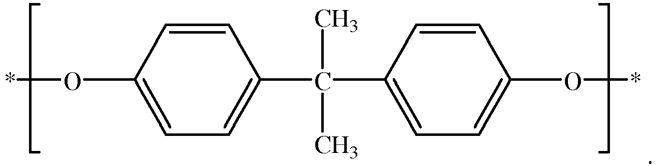 Included among the many methods of making the polyimide oligomer, including polyetherimide oligomer, are those disclosed in U.S. Patent Nos. 3,847,867 to Heath et al., 3,850,885 to Takekoshi et al., 3,852,242 and 3,855,178 to White, 3,983,093 to Williams et al., and 4,443,591 to Schmidt et al.

The repeating units of the non-siloxane polyimide block are formed by the reaction of a dianhydride and a diamine. Dianhydrides useful for forming the repeating units have the formula 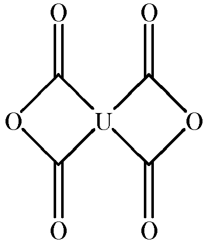 wherein U is as defined above. As mentioned above the term dianhydrides includes chemical equivalents of dianhydrides. In some embodiments, the dianhydride comprises an aromatic bis(ether anhydride). Examples of specific aromatic bis(ether anhydride)s are disclosed, for example, in U.S. Patent Nos. 3,972,902 to Heath et al. and 4,455,410 to Giles. Illustrative examples of aromatic bis(ether anhydride)s include 2,2-bis[4-(3,4-dicarboxyphenoxy)phenyl]propane dianhydride, 4,4'-bis(3,4-dicarboxyphenoxy)diphenyl ether dianhydride, 4,4'-bis(3,4-dicarboxyphenoxy)diphenyl sulfide dianhydride, 4,4'-bis(3,4-dicarboxyphenoxy)benzophenone dianhydride, 4,4'-bis(3,4-dicarboxyphenoxy)diphenyl sulfone dianhydride, 2,2-bis[4-(2,3-dicarboxyphenoxy)phenyl]propane dianhydride, 4,4'-bis(2,3-dicarboxyphenoxy)diphenyl ether dianhydride, 4,4'-bis(2,3-dicarboxyphenoxy)diphenyl sulfide dianhydride, 4,4'-bis(2,3-dicarboxyphenoxy)benzophenone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl-2,2-propane dianhydride, 4-(2,3-dicarboxyphenoxy)-4'-(3,4-dicarboxyphenoxy)diphenyl ether dianhydride, 4-(2,3-dicarboxyphenoxy)-4'-(3,4-dicarboxyphenoxy)diphenyl sulfide dianhydride, 4-(2,3-dicarboxyphenoxy)-4'-(3,4-dicarboxyphenoxy)benzophenone dianhydride, 4-(2,3-dicarboxyphenoxy)-4'-(3,4-dicarboxyphenoxy)diphenyl sulfone dianhydride, and mixtures thereof.

Diamines useful for forming the repeating units of the non-siloxane polyimide block have the formula

H₂N-R⁷-NH₂

wherein R⁷ is as defined above. Examples of specific organic diamines are disclosed, for example, in U.S. Patent Nos. 3,972,902 to Heath et al. and 4,455,410 to Giles. Exemplary diamines include ethylenediamine, propylenediamine, trimethylenediamine, diethylenetriamine, triethylenetertramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis (4-aminophenyl) sulfone, bis(4-aminophenyl) ether, 1,3-bis(3-aminopropyl) tetramethyldisiloxane, and mixtures thereof. In some embodiments, the diamine is an aromatic diamine, more specifically, m-phenylenediamine, p-phenylenediamine, sulfonyl dianiline, or a mixture thereof.

In general, the reactions can be carried out employing various solvents, e.g., o-dichlorobenzene, m-cresol/toluene, to effect a reaction between the dianhydride and the diamine, at temperatures of 100°C to 250°C. Alternatively, the polyimide block can be prepared by melt polymerization or interfacial polymerization, e.g., melt polymerization of an aromatic bis(anhydride) and a diamine by heating a mixture of the starting materials to elevated temperatures with concurrent stirring. Generally, melt polymerizations employ temperatures of 200°C to 400°C.

A chain-terminating agent can be employed to control the molecular weight of the polyimide-polysiloxane block copolymer. Monofunctional amines such as aniline, or monofunctional anhydrides such as phthalic anhydride can be employed.

The polyimide-polysiloxane block copolymer can be made by first forming the extended siloxane oligomer and then further reacting the extended siloxane oligomer with the non-siloxane diamine and dianhydride. Alternatively a non-siloxane diamine and dianhydride, can be reacted to form a polyimide oligomer, and the polyimide oligomer and extended siloxane oligomer can be reacted to form the polyimide-polysiloxane block copolymer.

When using a polyimide oligomer and an extended siloxane oligomer to form the block copolymer, the stoichiometric ratio of terminal anhydride functionalities to terminal amine functionalities can be 0.90 to 1.10, specifically 0.95 to 1.05. In some embodiments, the extended siloxane oligomer is amine-terminated and the non-siloxane polyimide oligomer is anhydride terminated. In other embodiments, the extended siloxane oligomer is anhydride-terminated and the non-siloxane polyimide oligomer is amine-terminated. In other embodiments, the extended siloxane oligomer and the non-siloxane polyimide oligomer are both amine-terminated and they are both reacted with a sufficient amount of dianhydride to provide a copolymer of the desired molecular weight. In other embodiments, the extended siloxane oligomer and the non-siloxane polyimide oligomer are both anhydride-terminated and they are both reacted with a sufficient amount of diamine to provide a copolymer of the desired molecular weight. Reactions conditions for the polymerization of the siloxane and polyimide oligomers are similar to those required for the formation of the oligomers themselves and can be determined without undue experimentation by one of ordinary skill in the art.

The siloxane content in the block copolymer is determined by the amount of extended siloxane oligomer used during polymerization. The siloxane content can be, for example, 1 to 40 weight percent, based on the total weight of the block copolymer. In some embodiments the siloxane content is at least 20 weight percent, specifically at least 25 weight percent, based on the total weight of the block copolymer. In some embodiments, the siloxane content is less than or equal to 35 weight percent. The siloxane content can calculated using the molecular weight of the diaminosiloxane used to form the extended siloxane oligomer. Alternatively, the siloxane content can be determined by nuclear magnetic resonance spectroscopy.

In some embodiments, the polyimide-polysiloxane block copolymer comprises a polysiloxane block having the structure 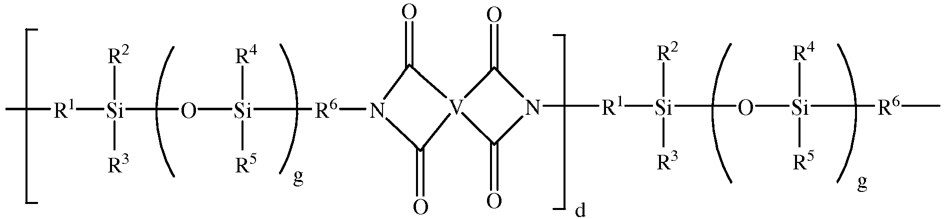 and a polyimide block having the structure 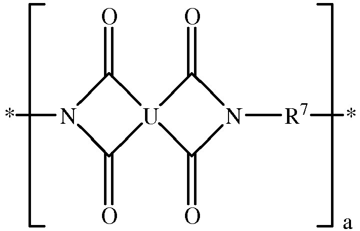 wherein R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 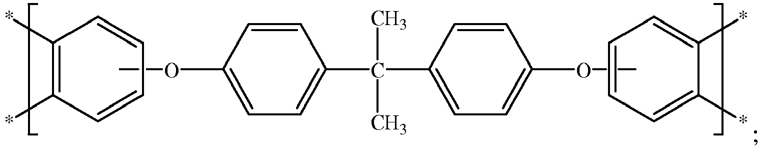 g is independently at each occurrence 2 to 30; d is 2 to 20; and a is 10 to 1,000.

In some embodiments two or more polyimide-polysiloxane block copolymers can be combined to achieve the desired siloxane content. The polyimide-polysiloxane block copolymers can be combined in any proportion. For example, when two polyimide-polysiloxane block copolymers are used the weight ratio of the first block copolymer to the second block copolymer can be 1:99 to 99:1.

In some embodiments, the polyimide-polysiloxane block copolymer contributes 0.4 to 10 weight percent, specifically 1 to 7 weight percent, more specifically 2 to 5 weight percent, of siloxane groups to the composition as a whole. In some embodiments, the composition comprises a total of 1 to 6 weight percent of siloxane groups derived from polyimide-polysiloxane block copolymer, and the poly(phenylene ether)-polysiloxane block copolymer, if any. Within this range, the total weight percent of siloxane groups can be 2 to 5 weight percent, specifically 2 to 4 weight percent, based on the total weight of the composition.

The polyimide-polysiloxane block copolymer is used in an amount of 5 to 40 weight percent, based on the total weight of the composition. Within this range, the polyimide-polysiloxane block copolymer amount can be 7 to 30 weight percent, specifically 7 to 20 weight percent, more specifically 7 to 15 weight percent.

In addition to the polyamide, the acid-functionalized poly(phenylene ether), and the polyimide-polysiloxane block copolymer, the composition comprises a metal dialkylphosphinate. As used herein, the term "metal dialkylphosphinate" refers to a salt comprising at least one metal cation and at least one dialkylphosphinate anion. In some embodiments, the metal dialkylphosphinate has the formula 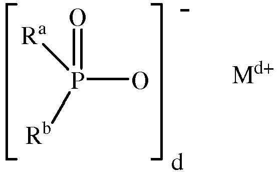 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, n-pentyl, and phenyl. In some embodiments, R^{a} and R^{b} are ethyl, M is aluminum, and d is 3 (that is, the metal dialkylphosphinate is aluminum tris(diethylphosphinate).

In some embodiments, the metal dialkylphosphinate is in particulate form. The metal dialkylphosphinate particles can have a median particle diameter (D50) less than or equal to 40 micrometers, specifically a D50 less than or equal to 30 micrometers, more specifically a D50 less than or equal to 25 micrometers. Additionally, the metal dialkylphosphinate can be combined with a polymer, such as a portion of the polyamide or a portion of the poly(phenylene ether)-polysiloxane block copolymer reaction product, to form a masterbatch. The metal dialkylphosphinate masterbatch comprises the metal dialkylphosphinate in an amount greater than is present in the composition as a whole. Employing a masterbatch for the addition of the metal dialkylphosphinate to the other components of the composition can facilitate addition and improve distribution of the metal dialkylphosphinate.

The composition comprises 2 to 15 weight percent metal dialkylphosphinate, based on the total weight of the composition. Within this range, the metal dialkylphosphinate amount can be 3 to 12 weight percent, specifically 4 to 10 weight percent.

The composition can, optionally, include flame retardants in addition to the metal dialkylphosphinate. Such additional flame retardants can include, for example, organophosphate esters (such as resorcinol bis(diphenyl phosphate) and bisphenol A bis(diphenyl phosphate), nitrogen-containing flame retardants (such as melamine cyanurate, melamine phosphate, melamine pyrophosphate, and melamine polyphosphate), metal hydroxides (such as magnesium hydroxide), and combinations thereof. In some embodiments, the flame retardant consists of the metal dialkylphosphinate.

The composition can, optionally, further include 2 to 20 weight percent glass fibers. In some embodiments, the composition excludes glass fibers. In some embodiments, the composition excludes electrically conductive fillers. In some embodiments, the composition excludes all fillers.

The composition can, optionally, further comprise one or more additives known in the thermoplastics art. For example, the composition can, optionally, further comprise an additive chosen from stabilizers, mold release agents, lubricants, processing aids, drip retardants, nucleating agents, UV blockers, dyes, pigments, antioxidants, anti-static agents, blowing agents, mineral oil, metal deactivators, antiblocking agents, and combinations thereof. When present, such additives are typically used in a total amount of less than or equal to 5 weight percent, specifically less than or equal to 2 weight percent, more specifically less than or equal to 1 weight percent, based on the total weight of the composition.

The composition can, optionally, exclude one or more of homopolystyrenes, rubber-modified polystyrenes, polyesters, polyolefins, block copolymers of alkenyl aromatic monomers and conjugated dienes, and hydrogenated block copolymers of alkenyl aromatic monomers and conjugated dienes. In some embodiments, the composition excludes any polymer other than the polyamide, the acid-functionalized poly(phenylene ether), and the polyimide-polysiloxane block copolymer. In some embodiments, the composition is halogen-free.

The composition can be used to mold rigid articles. In these embodiments, the composition must exhibit has a high degree of stiffness, objectively manifested as flexural modulus, that is greater than the stiffness provided by prior art composition intended for use in forming flexible insulation for wire and cable. Specifically, in these embodiments the composition exhibits a flexural modulus of 1800 to 2500 megapascals, measured at 23°C according to ISO 178:2010.

In a very specific embodiment, the composition comprises the product of melt blending: 42 to 52 weight percent polyamide-6,6; 28 to 38 weight percent of an acid-functionalized poly(phenylene ether) selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof; 5 to 15 weight percent polyimide-polysiloxane block copolymer; wherein the polyimide-polysiloxane block copolymer comprises a polysiloxane block having the structure 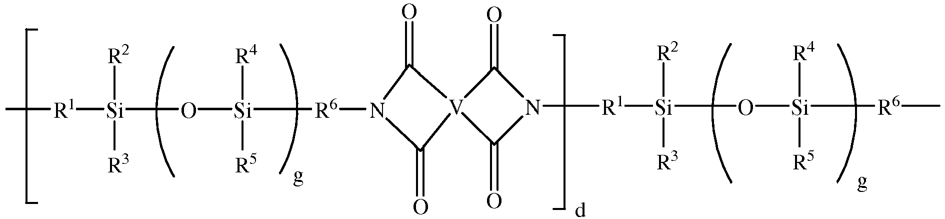 and a polyimide block having the structure 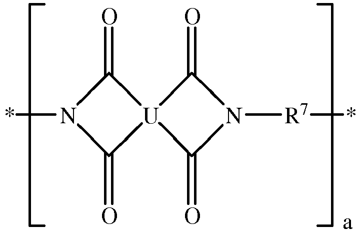 wherein R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 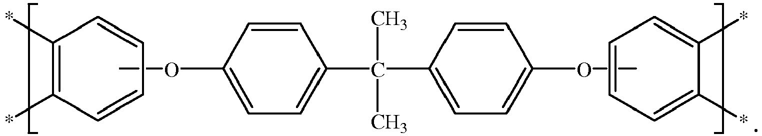 g is independently at each occurrence 2 to 30; d is 2 to 20; and a is 10 to 1,000; and 3 to 10 weight percent metal dialkylphosphinate; wherein all weight percents are based on the total weight of the composition. In some embodiments, the acid-functionalized poly(phenylene ether) is an acid-functionalized poly(2,6-dimethyl-1,4-phenylene ether). In some embodiments, the acid-functionalized poly(phenylene ether) is a combination of an acid-functionalized poly(2,6-dimethyl-1,4-phenylene ether) and an acid-functionalized poly(2,6-dimethyl-1,4-phenylene ether)-polysiloxane block copolymer.

The invention includes articles comprising the composition and all of its variations. The composition is particularly useful for forming parts for electrical components, such parts including photovoltaic junction boxes and connectors, inverter housings, automotive electrical connectors, electrical relays, charge couplers, and seats in mass transit vehicles. Suitable methods of forming articles include single layer and multilayer sheet extrusion, injection molding, blow molding, film extrusion, profile extrusion, pultrusion, compression molding, thermoforming, pressure forming, hydroforming, vacuum forming, Combinations of the foregoing article fabrication methods can be used. A skilled person can determine specific article-forming conditions. For example, injection molding can utilize a melt temperature of 240 to 300°C and a mold temperature of 60 to 120°C. One embodiment is an article comprising a composition comprising the product of melt blending: 40 to 73 weight percent polyamide; 20 to 50 weight percent acid-functionalized poly(phenylene ether); 5 to 40 weight percent polyimide-polysiloxane block copolymer; and 2 to 15 weight percent metal dialkylphosphinate; wherein all weight percents are based on the total weight of the composition. In some embodiments, the polyamide is polyamide-6,6; the polyamide amount is 42 to 52 weight percent; the acid-functionalized poly(phenylene ether) is selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof; the acid-functionalized poly(phenylene ether) amount is 28 to 38 weight percent; the polyimide-polysiloxane block copolymer comprises a polysiloxane block having the structure 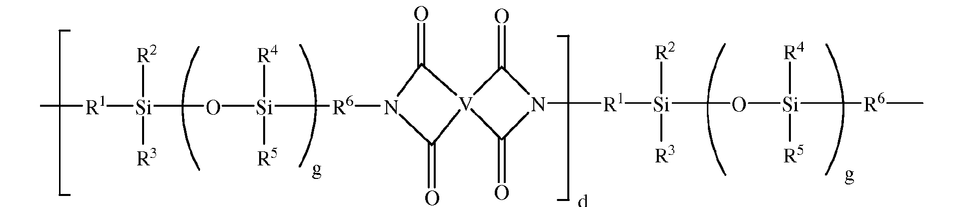 and a polyimide block having the structure 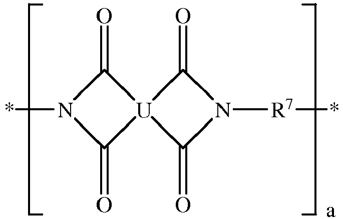 wherein R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 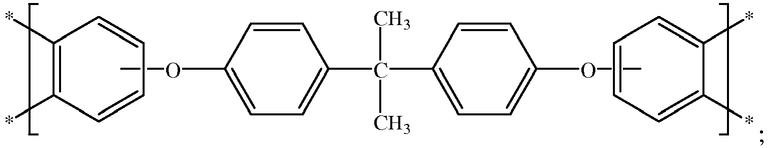 g is independently at each occurrence 2 to 30; d is 2 to 20; and a is 10 to 1,000; the polyimide-polysiloxane block copolymer amount is 5 to 15 weight percent; and the metal dialkylphosphinate is 3 to 10 weight percent.

The invention includes at least the following embodiments.
Embodiment 1: A composition comprising the product of melt blending: 40 to 73 weight percent polyamide; 20 to 50 weight percent acid-functionalized poly(phenylene ether); 5 to 40 weight percent polyimide-polysiloxane block copolymer; and 2 to 15 weight percent metal dialkylphosphinate; wherein all weight percents are based on the total weight of the composition.
Embodiment 2: The composition of embodiment 1, wherein the polyamide is selected from the group consisting of polyamide-6, polyamide-6,6, polyamide-4,6, polyamide-11, polyamide-12, polyamide-6,10, polyamide-6,12, polyamide 6/6,6, polyamide-6/6,12, polyamide MXD,6, polyamide-6,T, polyamide-6,1, polyamide-6/6,T, polyamide-6/6,I, polyamide-6,6/6,T, polyamide-6,6/6,I, polyamide-6/6,T/6,I, polyamide-6,6/6,T/6,I, polyamide-6/12/6,T, polyamide-6,6/12/6,T, polyamide-6/12/6,I, polyamide-6,6/12/6,1, and combinations thereof.
Embodiment 3: The composition of embodiment 1, wherein the polyamide is selected from the group consisting of polyamide-6, polyamide-6,6, and combinations thereof.
Embodiment 4: The composition of embodiment 1, wherein the polyamide comprises polyamide-6,6.
Embodiment 5: The composition of any of embodiments 1-4, wherein the acid-functionalized poly(phenylene ether) is the product of melt blending 95 to 99.5 parts by weight of a poly(phenylene ether) with 0.5 to 5 parts by weight of an acid functionalizing agent selected from the group consisting of citric acid, fumaric acid, maleic acid, maleic anhydride, and combinations thereof.
Embodiment 6: The composition of embodiment 5, wherein the poly(phenylene ether) comprises a homopolymer or copolymer of monomers selected from the group consisting of 2,6-dimethylphenol, 2,3,6-trimethylphenol, and combinations thereof.
Embodiment 7: The composition of embodiment 5, wherein the poly(phenylene ether) comprises a poly(phenylene ether)-polysiloxane block copolymer.
Embodiment 8: The composition of embodiment 7, wherein the acid-functionalized poly(phenylene ether) contributes 0.4 to 4 weight percent of siloxane groups to the composition.
Embodiment 9: The composition of any of embodiments 1-8, wherein the polyimide-polysiloxane block copolymer comprises a polyimide block and a polysiloxane block; wherein the polysiloxane block has the structure 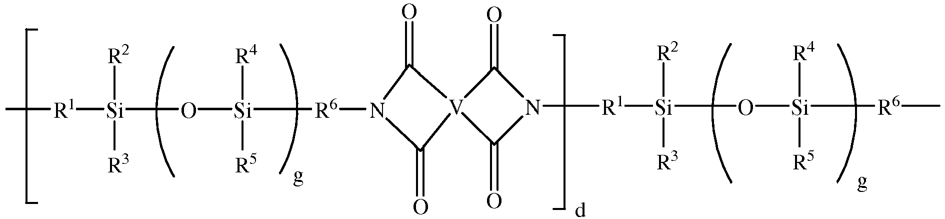 wherein R¹ and R⁶ are independently at each occurrence divalent groups selected from the group consisting of substituted or unsubstituted, saturated, unsaturated, or aromatic divalent monocyclic groups having 5 to 30 carbon atoms, substituted or unsubstituted, saturated, unsaturated, or aromatic divalent polycyclic groups having 5 to 30 carbon atoms, substituted or unsubstituted alkylene groups having 1 to 30 carbon atoms, and substituted or unsubstituted alkenylene groups having 2 to 30 carbon atoms; R², R³, R⁴, and R⁵ are independently at each occurrence monovalent groups selected from the group consisting of substituted or unsubstituted, saturated, unsaturated, or aromatic monovalent monocyclic groups having 5 to 30 carbon atoms, substituted or unsubstituted, saturated, unsaturated, or aromatic monovalent polycyclic groups having 5 to 30 carbon atoms, substituted or unsubstituted alkyl groups having 1 to 30 carbon atoms, and substituted or unsubstituted alkenyl groups having 2 to 30 carbon atoms; V is a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, substituted or unsubstituted alkenyl groups having 2 to 30 carbon atoms, and combinations thereof; each occurrence of g is independently 2 to 30; and d is 2 to 20; and wherein the polyimide block has the structure 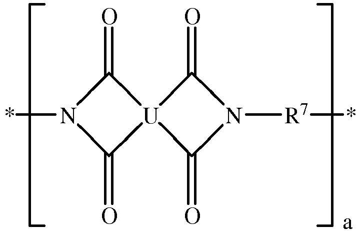 wherein a is 10 to 1,000; U is a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, substituted or unsubstituted alkenyl groups having 2 to 30 carbon atoms, and combinations thereof; and R⁷ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 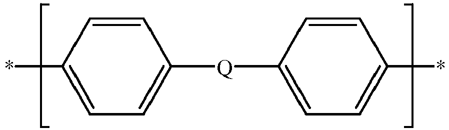 wherein Q is selected from the group consisting of -O-, -S-, -C(O)-, -S(O)₂-, -S(O)-, and -C_{y}H_{2y}- where y is 1 to 20.
Embodiment 10: The composition of embodiment 9, wherein R¹ and R⁶ are independently at each occurrence alkylene groups having 2 to 6 carbon atoms; wherein R⁷ is independently at each occurrence meta-phenylene or para-phenylene; wherein R², R³, R⁴, and R⁵ are methyl; wherein U and V have the structure 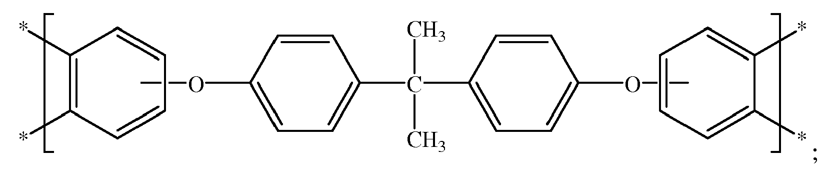 and wherein g is independently at each occurrence 5 to 15.
Embodiment 11: The composition of any of embodiments 1-10, wherein the polyimide-polysiloxane block copolymer contributes 0.4 to 10 weight percent of siloxane groups to the composition.
Embodiment 12: The composition of any of embodiments 1-11, comprising 1 to 6 weight percent of siloxane groups.
Embodiment 13: The composition of any of embodiments 1-12, exhibiting a flexural modulus of 1800 to 2500 megapascals, measured at 23°C according to ISO 178:2010.
Embodiment 14: A composition comprising the product of melt blending: 42 to 52 weight percent polyamide-6,6; 28 to 38 weight percent of an acid-functionalized poly(phenylene ether) selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof; 5 to 15 weight percent polyimide-polysiloxane block copolymer; wherein the polyimide-polysiloxane block copolymer comprises a polysiloxane block having the structure 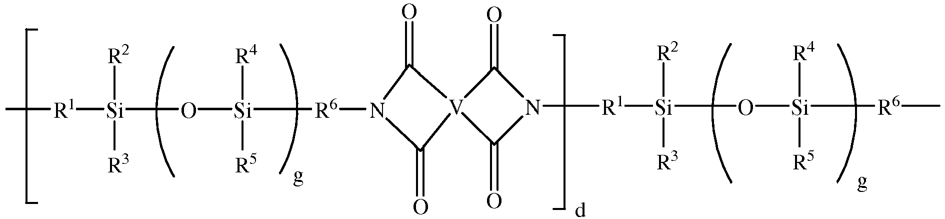 and a polyimide block having the structure 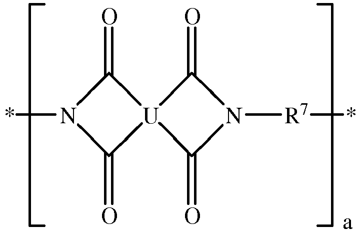 wherein R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 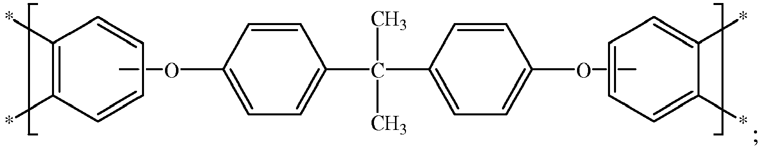 g is independently at each occurrence 5 to 15; d is 2 to 20; and a is 10 to 1,000; and 3 to 10 weight percent metal dialkylphosphinate; wherein all weight percents are based on the total weight of the composition.
Embodiment 14a: wherein the polyamide is polyamide-6,6; wherein the polyamide amount is 42 to 52 weight percent; wherein the acid-functionalized poly(phenylene ether) is selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof; wherein the acid-functionalized poly(phenylene ether) amount is 28 to 38 weight percent; wherein the polyimide-polysiloxane block copolymer comprises a polysiloxane block having the structure 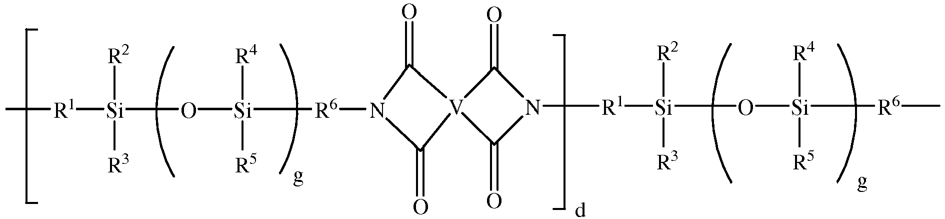 wherein g is independently at each occurrence 5 to 15, and d is 2 to 20; and a polyimide block having the structure 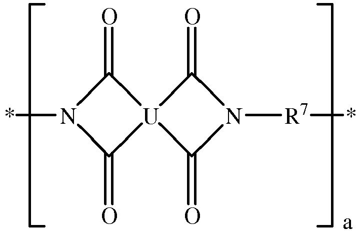 wherein a is 10 to 1,000; R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; and U and V have the structure 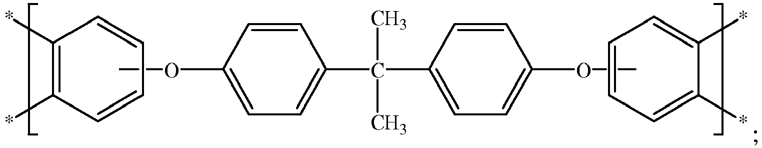 wherein the polyimide-polysiloxane block copolymer amount is 5 to 15 weight percent; and wherein the metal dialkylphosphinate amount is 3 to 10 weight percent.
Embodiment 15: The composition of embodiment 14, wherein the acid-functionalized poly(phenylene ether) comprises an acid-functionalized poly(2,6-dimethyl-1,4-phenylene ether).
Embodiment 16: The composition of embodiment 14, wherein the acid-functionalized poly(phenylene ether) is a combination of an acid-functionalized poly(2,6-dimethyl-1,4-phenylene ether) and an acid-functionalized poly(2,6-dimethyl-1,4-phenylene ether)-polysiloxane block copolymer.
Embodiment 17: An article comprising a composition comprising the product of melt blending: 40 to 73 weight percent polyamide; 20 to 50 weight percent acid-functionalized poly(phenylene ether); 5 to 40 weight percent polyimide-polysiloxane block copolymer; and 2 to 15 weight percent metal dialkylphosphinate; wherein all weight percents are based on the total weight of the composition.
Embodiment 18: The article comprising of embodiment 17, wherein the polyamide is polyamide-6,6; wherein the polyamide amount is 42 to 52 weight percent; wherein the acid-functionalized poly(phenylene ether) is selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof; wherein the acid-functionalized poly(phenylene ether) amount is 28 to 38 weight percent; wherein the polyimide-polysiloxane block copolymer comprises a polysiloxane block having the structure 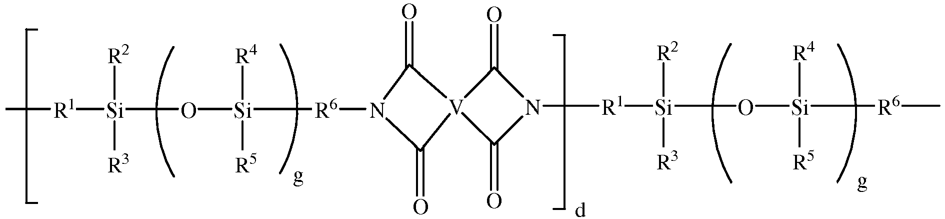 and a polyimide block having the structure 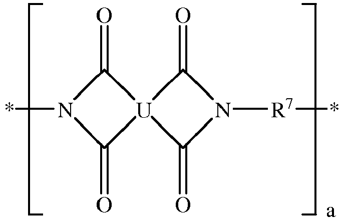 wherein R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; U and V have the structure 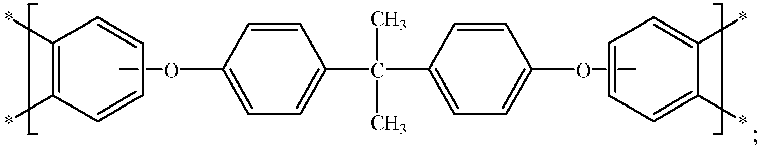 g is independently at each occurrence 5 to 15; d is 2 to 20; and a is 10 to 1,000; and wherein the polyimide-polysiloxane block copolymer amount is 5 to 15 weight percent; and wherein the metal dialkylphosphinate is 3 to 10 weight percent.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples. EXAMPLES 1-12, COMPARATIVE EXAMPLES 1-4

These examples illustrate the improved property balance exhibited by the inventive composition.

Components used to form the compositions are summarized in Table 1.

**Table 1**

| Component | Description |
|---|---|
| PPE | Poly(2,6-dimethyl-1,4-phenylene ether), CAS Reg. No. 24938-67-8, having an intrinsic viscosity of about 0.4 deciliter per gram as measured in chloroform at 25°C; obtained as PPO 803 from SABIC Innovative Plastics. |
| FPPE | A fumaric acid functionalized PPE, prepared by melt blending 98 parts by weight PPE and 2 parts by weight fumaric acid in an extruder. |
| PPE-Si | A mixture of poly(2,6-dimethyl-1,4-phenylene ether) (CAS Reg. No. 24938-67-8) and poly(2,6-dimethyl-1,4-phenylene ether)-polydimethylsiloxane block copolymer (CAS Reg. No. 1202019-56-4), the mixture having a polysiloxane content of about 5 weight percent and an intrinsic viscosity of about 0.4 deciliter per gram as measured in chloroform at 25°C prepared according to the procedure of U.S. Patent No. 8,017,697 to Carrillo et al., Example 16. |
| FPPE-Si | A fumaric acid functionalized PPE-Si, prepared by melt blending 98 parts by weight PPE-Si and 2 parts by weight fumaric acid in an extruder. |
| PA66 | Polyamide-6,6, CAS Reg. No. 32131-17-2, having a relative viscosity of about 126 measured in 90% formic acid according to ASTM D789, and an amine end group concentration of about 51 microequivalents per gram; obtained in pellet form as STABAMID 24FE1 from Rhodia. |
| PEI-Si | Polyetherimide-polysiloxane extended block copolymer blend having a polyetherimide weight content of 70 weight percent and a polysiloxane content of 30 weight percent; obtained as SILTEM Resin STM1600 from SABIC Innovative Plastics. |
| AO1 | Octadecyl 3,5-di-tert-butyl-4-hydroxyhydrocinnamate, CAS Reg. No.2082-79-3; obtained as IRGANOX 1076 from BASF. |
| AO2 | N,N'-Hexamethylene bis[3-(3,5-di-t-butyl-4-hydroxyphenyl)propionamide]; obtained as IRGANOX 1098 from Ciba. |
| Fumaric acid | Fumaric acid, CAS Reg. No. 10-17-8. |
| DEPAL | Aluminum tris(diethylphosphinate), CAS Reg. No. 225789-38-8; obtained as EXOLIT OP1230 from Clariant. |

Component amounts used to form the compositions are summarized in Table 2, where amounts are expressed in weight percent based on the total weight of the composition. Compounding was conducted on a 28 millimeter internal diameter ZSK twin-screw extruder at a melt temperature of 240 to 300°C and a throughput of 15 kilograms/hour. First, the functionalized poly(phenylene ether)s designated FPPE or FPPE-Si were prepared by compounding 98 parts by weight PPE or PPE-Si, respectively, with 2 parts by weight fumaric acid. Second, the resulting FPPE or FPPE-Si was dry-blended with PEI-Si and DEPAL, and the resulting dry-blended mixture was added to the feedthroat of the extruder, and polyamide was added downstream via a side feeder. The extrudate was pelletized, and pellets were conditioned for 5.5 hours at 120°C under vacuum before use for melt viscosity testing or injection molding samples for physical property testing.

Property values are also summarized in Table 2. Melt viscosity testing was performed according to ISO 11443:2005, using a temperature of 300°C and the multi-point method where melt viscosity at various shear rates was measured. In Table 2, melt viscosity values having units of Pascal-seconds were measured at a shear rate of 1,500 second⁻¹.

Melt volume-flow rate values, expressed in units of cubic centimeters per 10 minutes, were determined according to ISO 1133-2005 using Procedure B (displacement-measurement, automatic method), a test temperature of 300°C, an applied load of 5 kilograms, a capillary diameter of 2.0955 millimeters, a capillary length of 8.0 millimeters, a test specimen form of pellets, specimen conditioning for 5.5 hours at 120°C before testing, and one run with five readings per composition.

For physical property testing, compositions were injection molded into test samples using an injection molding machine operating at a melt temperature of 270 to 285°C and a mold temperature of 80 to 100°C. Test samples were conditioned for 48 hours at 23°C before testing.

Tensile modulus values, expressed in units of megapascals, and tensile strain at break values, express in units of percent, were determined at 23°C according to ISO 527-1:2012 using a Type 1A bar having dimensions of 80 millimeters by 10 millimeters by 4 millimeters, a gage length of 50 millimeters, a grip separation of 115 millimeters, a test speed of 1 millimeter/minute, and five samples per composition.

Izod unnotched impact strength values, expressed in units of kilojoules/meter², were determined at 23°C according to ISO 180:2000 using a Type A radius and a notch angle of 45 degrees and an 8 millimeter depth of material under the notch for notched samples, a hammer energy of 2.75 joules, bar cross-sectional dimensions of 10 millimeters by 4 millimeters, and five samples per composition. Table 2 also lists the failure modes of the five samples tested: "P" refers to a failure mode of "partial break" (corresponding to ductile failure), and "C" refers to a failure mode of complete break (corresponding to brittle failure). When all five samples have a failure mode of "partial break", the composition necessarily has an unnotched Izod impact strength value of 137.39 kilojoules/meter².

Flexural modulus and flexural strength values, expressed in units of megapascals, were determined at 23°C according to ISO 178:2010 using bar cross-sectional dimensions of 80 millimeters by 10 millimeters by 4 millimeters, a support span of 64 millimeters, and three specimens per composition.

Vicat softening temperature values, expressed in units of degrees Celsius, were determined according to ISO 306:2004 using Method B120, a needle penetration of 1 millimeter at reading, a pre-loading time of 5 minutes, and three specimens per composition.

Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 0.8 millimeters were conditioned at 23°C and 50% relative humidity for at least 48 hours. In the UL 94 20 mm Vertical Burning Flame Test, a set of five flame bars is tested. For each bar, a flame is applied to the bar then removed, and the time required for the bar to self-extinguish (first afterflame time, t1) is noted. The flame is then reapplied and removed, and the time required for the bar to self-extinguish (second afterflame time, t2) and the post-flame glowing time (afterglow time, t3) are noted. To achieve a rating of V-0, the afterflame times t1 and t2 for each individual specimen must be less than or equal to 10 seconds; and the total afterflame time for all five specimens (t1 plus t2 for all five specimens) must be less than or equal to 50 seconds; and the second afterflame time plus the afterglow time for each individual specimen (t2 + t3) must be less than or equal to 30 seconds; and no specimen can flame or glow up to the holding clamp; and the cotton indicator cannot be ignited by flaming particles or drops. To achieve a rating of V-1, the afterflame times t1 and t2 for each individual specimen must be less than or equal to 30 seconds; and the total afterflame time for all five specimens (t1 plus t2 for all five specimens) must be less than or equal to 250 seconds; and the second afterflame time plus the afterglow time for each individual specimen (t2 + t3) must be less than or equal to 60 seconds; and no specimen can flame or glow up to the holding clamp; and the cotton indicator cannot be ignited by flaming particles or drops. To achieve a rating of V-2, the afterflame times t1 and t2 for each individual specimen must be less than or equal to 30 seconds; and the total afterflame time for all five specimens (t1 plus t2 for all five specimens) must be less than or equal to 250 seconds; and the second afterflame time plus the afterglow time for each individual specimen (t2 + t3) must be less than or equal to 60 seconds; and no specimen can flame or glow up to the holding clamp; but the cotton indicator can be ignited by flaming particles or drops. Compositions not meeting the V-2 criteria are considered to have failed.

Comparative Tracking Index (CTI) values, express in units of volts, were conducted according to the International Electrotechnical Commission (IEC) standard IEC-60112, Third edition (1979) using test samples having a thickness of 3.2 millimeters and diameter of 10 centimeters, and five samples per composition. The reported value is the voltage that causes tracking after 50 drops of ammonium chloride solution have fallen on the material surface.

The property results in Table 2 show that all inventive examples exhibit improved flame retardancy relative to the corresponding comparative examples lacking metal dialkylphosphinate (e.g., Example 1 exhibits a V-1 rating and Examples 2 and 3 exhibit V-0 ratings relative to the failure of Comparative Example 1; Examples 4-6 all exhibit V-0 ratings relative to the failure of Comparative Example 2; Examples 7 and 8 exhibit V-1 ratings and Example 9 exhibits a V-0 rating relative to the failure of Comparative Example 3; and Example 11 exhibits a V-1 rating and Examples 10 and 12 exhibit V-0 ratings relative to Comparative Example 4). The inventive examples also exhibit substantial increases in tensile modulus relative to corresponding comparative examples (e.g., Examples 1-3 exhibit tensile modulus values of 2510.8, 2590.2 and 2772.8 megapascals, respectively, relative to a value of 2433.2 megapascals for Comparative Example 1; Examples 4-6 exhibit tensile modulus values of 2374.0, 2422.8, and 2598.2 megapascals, respectively, relative to a value of 2251.2 megapascals for Comparative Example 2; Examples 7-9 exhibit tensile modulus values of 2367.8, 2446.0, and 2627.0 megapascals, respectively, relative to a value of 2276.4 megapascals for Comparative Example 3; and Examples 10-12 exhibit tensile modulus values of 2228.6, 2274.4, and 2461.2 megapascals, respectively, relative to a value of 2079.6 megapascals for Comparative Example 4). The inventive examples with relatively high DEPAL content and relatively low PEI-Si content exhibit substantially improved (increased) Comparative Tracking Index (CTI) values, which are a measure of surface resistance (e.g., Example 3 exhibits a CTI value of 600 volts, relative to a value of 350 volts for Comparative Example 1; and Example 9 exhibits a CTI value of 525 volts, relative to a value of 300 volts for Comparative Example 3). All of the inventive examples except for those with FPPE-Si and relatively high DEPAL content exhibit improved (reduced) melt viscosity relative to corresponding comparative examples (e.g., Examples 1-3 exhibit melt viscosity values of 76.83, 71.83, and 62.82 pascal-seconds relative to a value of 90.01 pascal-seconds for Comparative Example 1; Examples 4-6 exhibit melt viscosity values of 74.05, 70.21, and 75.22 pascal-seconds relative to a value of 89.39 pascal-seconds for Comparative Example 2; Example 7 exhibits a melt viscosity value of 75.77 pascal-seconds relative to a value of 87.17 pascal-seconds for Comparative Example 3; and Examples 10-12 exhibit melt viscosity values of 103.01, 100.57, and 103.46 pascal-seconds relative to a value of 119.97 pascal-seconds for Comparative Example 4). And most of the inventive examples with relatively low DEPAL contents exhibit improved unnotched Izod impact strength relative to corresponding comparative examples (e.g., Examples 1 and 2 exhibit unnotched Izod impact strength values of 137.39 kilojoules/meter² relative to a value of 118.40 kilojoules/meter² for Comparative Example 1; Example 4 exhibits an unnotched Izod impact strength value of 137.39 kilojoules/meter² relative to a value of 134.16 kilojoules/meter² for Comparative Example 2; Examples 10 and 11 exhibit unnotched Izod impact strength values of 137.39 kilojoules/meter² relative to a value of 127.01 kilojoules/meter² for Comparative Example 4).

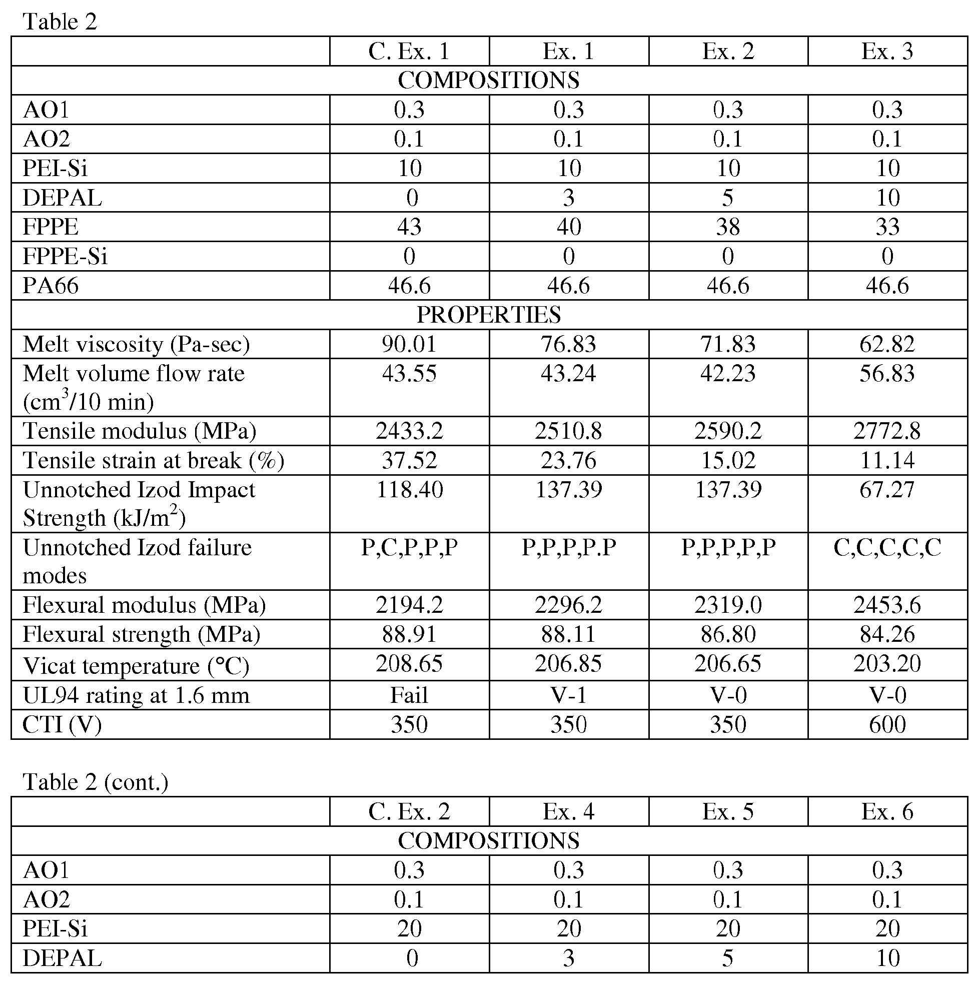

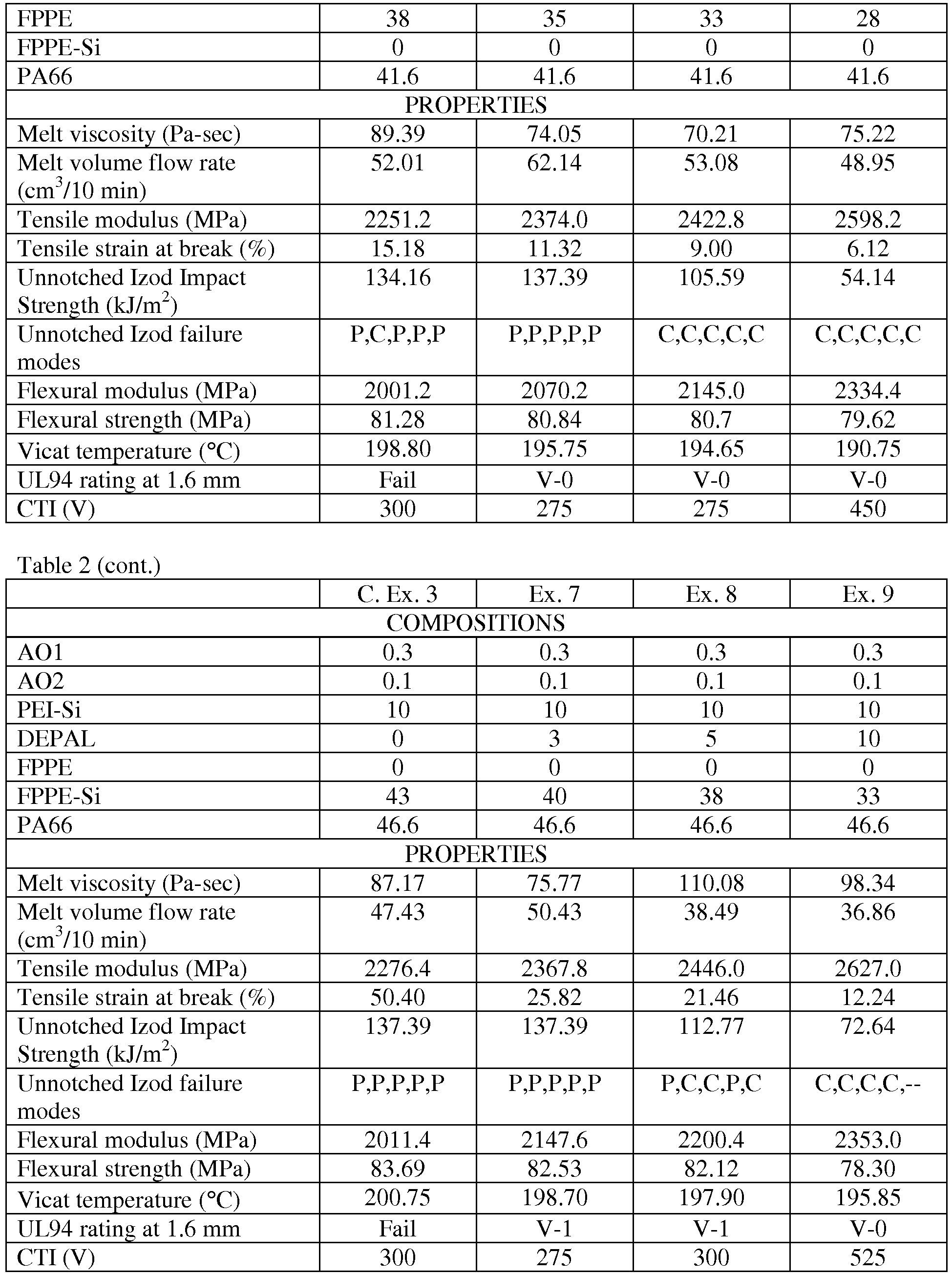

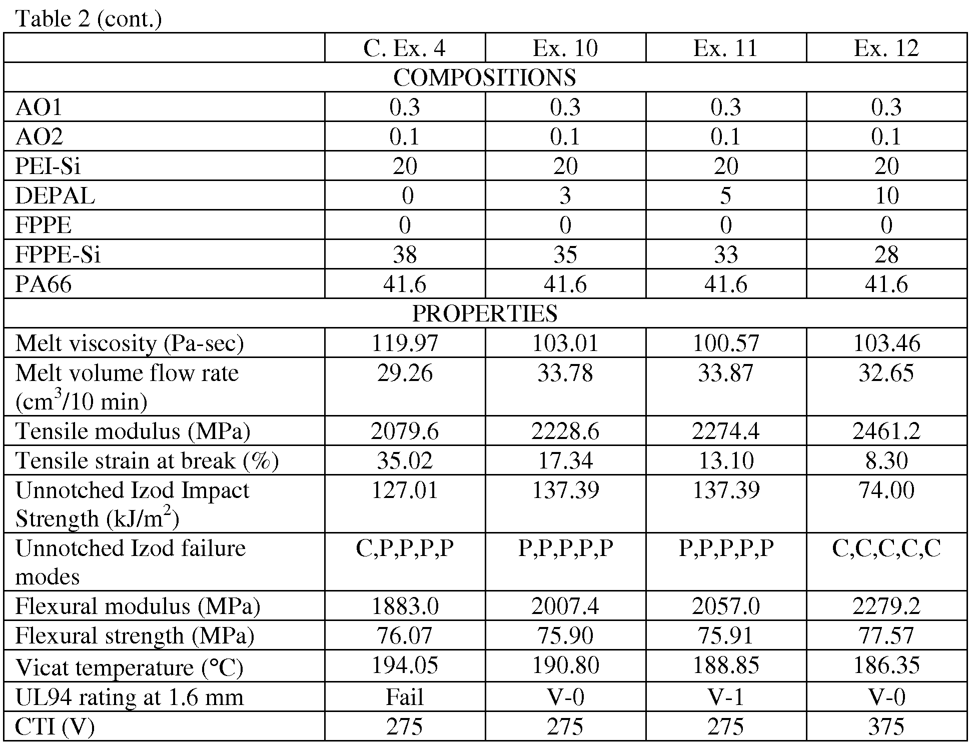

## Claims

1. A composition comprising the product of melt blending:
40 to 73 weight percent polyamide;
20 to 50 weight percent acid-functionalized poly(phenylene ether);
5 to 40 weight percent polyimide-polysiloxane block copolymer; and
2 to 15 weight percent metal dialkylphosphinate;
wherein all weight percents are based on the total weight of the composition.

2. The composition of claim 1, wherein the polyamide is selected from the group consisting of polyamide-6, polyamide-6,6, polyamide-4,6, polyamide-11, polyamide-12, polyamide-6,10, polyamide-6,12, polyamide 6/6,6, polyamide-6/6,12, polyamide MXD,6, polyamide-6,T, polyamide-6,1, polyamide-6/6,T, polyamide-6/6,I, polyamide-6,6/6,T, polyamide-6,6/6,I, polyamide-6/6,T/6,I, polyamide-6,6/6,T/6,I, polyamide-6/12/6,T, polyamide-6,6/12/6,T, polyamide-6/12/6,I, polyamide-6,6/12/6,1, and combinations thereof.

3. The composition of claim 1 or 2, wherein the acid-functionalized poly(phenylene ether) is the product of melt blending 95 to 99.5 parts by weight of a poly(phenylene ether) with 0.5 to 5 parts by weight of an acid functionalizing agent selected from the group consisting of citric acid, fumaric acid, maleic acid, maleic anhydride, and combinations thereof.

4. The composition of claim 3, wherein the poly(phenylene ether) comprises a homopolymer or copolymer of monomers selected from the group consisting of 2,6-dimethylphenol, 2,3,6-trimethylphenol, and combinations thereof.

5. The composition of claim 3, wherein the poly(phenylene ether) comprises a poly(phenylene ether)-polysiloxane block copolymer.

6. The composition of claim 5, wherein the acid-functionalized poly(phenylene ether) contributes 0.4 to 4 weight percent of siloxane groups to the composition.

7. The composition of any of claims 1-6, wherein the polyimide-polysiloxane block copolymer comprises a polyimide block and a polysiloxane block;
wherein the polysiloxane block has the structure 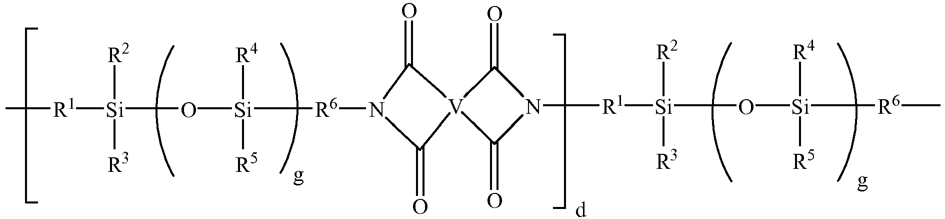 wherein R¹ and R⁶ are independently at each occurrence divalent groups selected from the group consisting of substituted or unsubstituted, saturated, unsaturated, or aromatic divalent monocyclic groups having 5 to 30 carbon atoms, substituted or unsubstituted, saturated, unsaturated, or aromatic divalent polycyclic groups having 5 to 30 carbon atoms, substituted or unsubstituted alkylene groups having 1 to 30 carbon atoms, and substituted or unsubstituted alkenylene groups having 2 to 30 carbon atoms; R², R³, R⁴, and R⁵ are independently at each occurrence monovalent groups selected from the group consisting of substituted or unsubstituted, saturated, unsaturated, or aromatic monovalent monocyclic groups having 5 to 30 carbon atoms, substituted or unsubstituted, saturated, unsaturated, or aromatic monovalent polycyclic groups having 5 to 30 carbon atoms, substituted or unsubstituted alkyl groups having 1 to 30 carbon atoms, and substituted or unsubstituted alkenyl groups having 2 to 30 carbon atoms; V is a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, substituted or unsubstituted alkenyl groups having 2 to 30 carbon atoms, and combinations thereof; each occurrence of g is independently 2 to 30; and d is 2 to 20; and
wherein the polyimide block has the structure 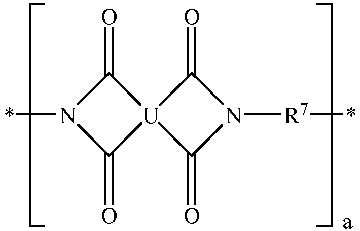 wherein a is 10 to 1,000; U is a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, substituted or unsubstituted alkenyl groups having 2 to 30 carbon atoms, and combinations thereof; and R⁷ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 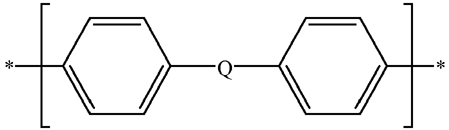 wherein Q is selected from the group consisting of -O-, -S-, -C(O)-, -S(O)₂-, -S(O)-, and -C_{y}H_{2y}- where y is 1 to 20.

8. The composition of claim 7,
wherein R¹ and R⁶ are independently at each occurrence alkylene groups having 2 to 6 carbon atoms;
wherein R⁷ is independently at each occurrence meta-phenylene or para-phenylene;
wherein R², R³, R⁴, and R⁵ are methyl;
wherein U and V have the structure 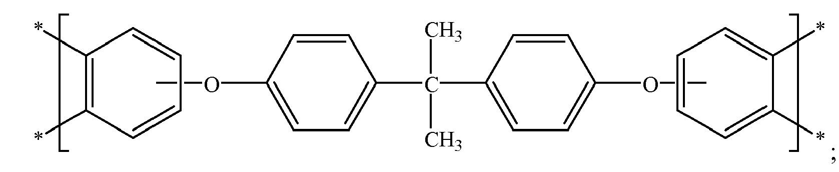 and
wherein g is independently at each occurrence 5 to 15.

9. The composition of any of claims 1-8, wherein the polyimide-polysiloxane block copolymer contributes 0.4 to 10 weight percent of siloxane groups to the composition.

10. The composition of any of claims 1-9, comprising 1 to 6 weight percent of siloxane groups.

11. The composition of claim 1,
wherein the polyamide is polyamide-6,6;
wherein the polyamide amount is 42 to 52 weight percent;
wherein the acid-functionalized poly(phenylene ether) is selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof;
wherein the acid-functionalized poly(phenylene ether) amount is 28 to 38 weight percent;
wherein the polyimide-polysiloxane block copolymer comprises a polysiloxane block having the structure 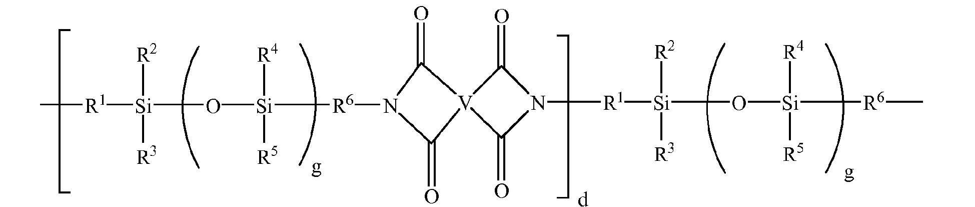 wherein g is independently at each occurrence 5 to 15, and d is 2 to 20; and a polyimide block having the structure 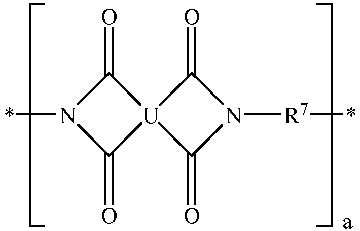 wherein a is 10 to 1,000; R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; and U and V have the structure 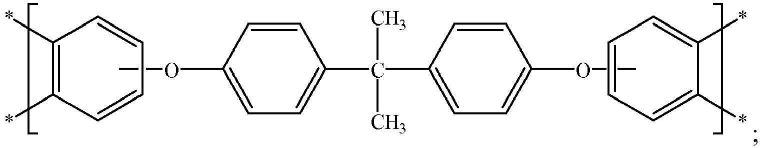 wherein the polyimide-polysiloxane block copolymer amount is 5 to 15 weight percent; and
wherein the metal dialkylphosphinate amount is 3 to 10 weight percent.

12. The composition of claim 11, wherein the acid-functionalized poly(phenylene ether) comprises an acid-functionalized poly(2,6-dimethyl-1,4-phenylene ether).

13. The composition of claim 11, wherein the acid-functionalized poly(phenylene ether) is a combination of an acid-functionalized poly(2,6-dimethyl-1,4-phenylene ether) and an acid-functionalized poly(2,6-dimethyl-1,4-phenylene ether)-polysiloxane block copolymer.

14. An article comprising a composition comprising the product of melt blending:
40 to 73 weight percent polyamide;
20 to 50 weight percent acid-functionalized poly(phenylene ether);
5 to 40 weight percent polyimide-polysiloxane block copolymer; and
2 to 15 weight percent metal dialkylphosphinate;
wherein all weight percents are based on the total weight of the composition.

15. The article comprising of claim 14,
wherein the polyamide is polyamide-6,6;
wherein the polyamide amount is 42 to 52 weight percent;
wherein the acid-functionalized poly(phenylene ether) is selected from the group consisting of acid-functionalized poly(2,6-dimethyl-1,4-phenylene ether)s, acid-functionalized poly(2,6-dimethyl-1,4-phenylene ether)-polysiloxane block copolymers, and combinations thereof;
wherein the acid-functionalized poly(phenylene ether) amount is 28 to 38 weight percent;
wherein the polyimide-polysiloxane block copolymer comprises a polysiloxane block having the structure 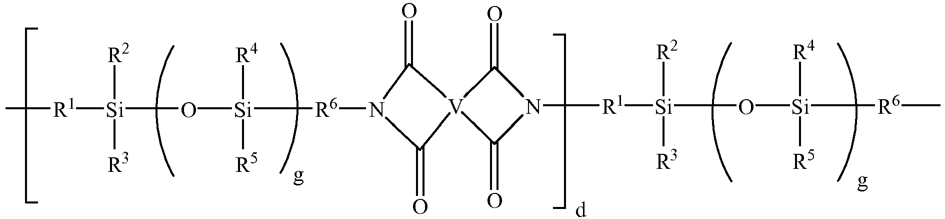 wherein g is independently at each occurrence 5 to 15, and d is 2 to 20; and a polyimide block having the structure 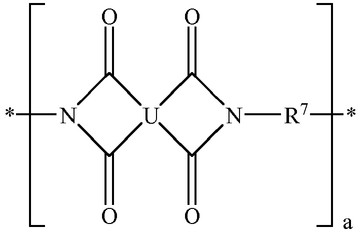 wherein a is 10 to 1,000; R¹ and R⁶ are independently at each occurrence alkylene groups having 2 to 6 carbon atoms; R⁷ is independently at each occurrence meta-phenylene or para-phenylene; R², R³, R⁴, and R⁵ are methyl; and U and V have the structure 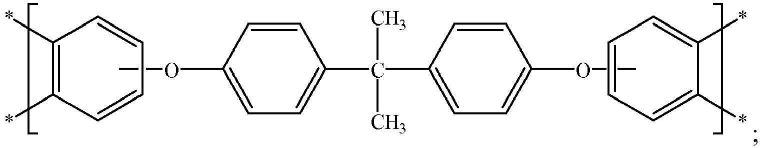 wherein the polyimide-polysiloxane block copolymer amount is 5 to 15 weight percent; and
wherein the metal dialkylphosphinate amount is 3 to 10 weight percent.

## Patentansprüche

1. Zusammensetzung, umfassend das Produkt des Schmelzmischens:
40 bis 73 Gewichtsprozent Polyamid;
20 bis 50 Gewichtsprozent Säure-funktionalisierter Poly(phenylenether);
5 bis 40 Gewichtsprozent Polyimid-Polysiloxan-Block-Copolymer; und
2 bis 15 Gewichtsprozent Metalldialkylphosphinat;
wobei alle Gewichtsprozentangaben auf das Gesamtgewicht der Zusammensetzung bezogen sind.

2. Zusammensetzung nach Anspruch 1, wobei das Polyamid ausgewählt ist aus der Gruppe bestehend aus Polyamid-6, Polyamid-6,6, Polyamid-4,6, Polyamid-11, Polyamid-12, Polyamid-6,10, Polyamid-6,12, Polyamid 6/6,6, Polyamid-6/6,12, Polyamide MXD,6, Polyamid-6,T, Polyamid-6,1, Polyamid-6/6,T, Polyamid-6/6,1, Polyamid-6,6/6,T, Polyamid-6,6/6,I, Polyamid-6/6,T/6,I, Polyamid-6,6/6,T/6,I, Polyamid-6/12/6,T, Polyamid-6,6/12/6,T, Polyamid-6/12/6,1, Polyamid-6,6/12/6,1, und Kombinationen davon.

3. Zusammensetzung nach Anspruch 1 oder 2, wobei der Säure-funktionalisierte Poly(phenylenether) das Produkt des Schmelzmischens von 95 bis 99,5 Gewichtsteilen eines Poly(phenylenether)s mit 0,5 bis 5 Gewichtsteilen eines Säure-Funktionalisierungsmittels ausgewählt aus der Gruppe bestehend aus Citronensäure, Fumarsäure, Maleinsäure, Maleinsäureanhydrid, und Kombinationen davon ist.

4. Zusammensetzung nach Anspruch 3, wobei der Poly(phenylenether) ein Homopolymer oder Copolymer von Monomeren ausgewählt aus der Gruppe bestehend aus 2,6-Dimethylphenol, 2,3,6-Trimethylphenol und Kombination davon umfasst.

5. Zusammensetzung nach Anspruch 3, wobei der Poly(phenylenether) ein Poly(phenylenether)-Polysiloxan-Block-Copolymer umfasst.

6. Zusammensetzung nach Anspruch 5, wobei der Säure-funktionalisierte Poly(phenylenether) 0,4 bis 4 Gewichtsprozent Siloxangruppen zu der Zusammensetzung beiträgt.

7. Zusammensetzung nach irgendeinem der Ansprüche 1 bis 6, wobei das Polyimid-Polysiloxan-Block-Copolymer einen Polyimid-Block und einen Polysiloxan-Block umfasst;
wobei der Polysiloxan-Block die Struktur 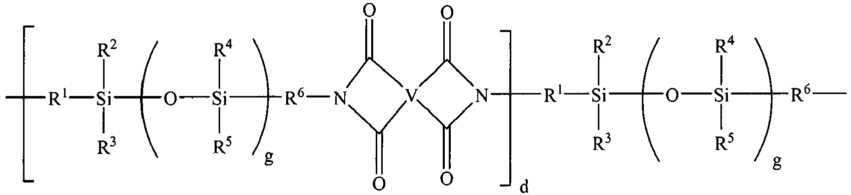 aufweist, wobei R¹ und R⁶ unabhängig von jedem Auftreten zweiwertige Gruppen sind, ausgewählt aus der Gruppe bestehend aus substituierten oder unsubstituierten, gesättigten, ungesättigten oder aromatischen zweiwertigen monocyclischen Gruppen mit 5 bis 30 Kohlenstoffatomen, substituierten oder unsubstituierten, gesättigten, ungesättigten, oder aromatischen zweiwertigen polycyclischen Gruppen mit 5 bis 30 Kohlenstoffatomen, substituierten oder unsubstituierten Alkylengruppen mit 1 bis 30 Kohlenstoffatomen, und substituierten oder unsubstituierten Alkenylengruppen mit 2 bis 30 Kohlenstoffatomen, R², R³, R⁴, und R⁵ unabhängig von jedem Auftreten einwertige Gruppen sind, ausgewählt aus der Gruppe bestehend aus substituierten oder unsubstituierten, gesättigten, ungesättigten oder aromatischen einwertigen monocyclischen Gruppen mit 5 bis 30 Kohlenstoffatomen, substituierten oder unsubstituierten, gesättigten, ungesättigten oder aromatischen einwertigen polycyclischen Gruppen mit 5 bis 30 Kohlenstoffatomen, substituierten oder unsubstituierten Alkylgruppen mit 1 bis 30 Kohlenstoffatomen, und substituierten oder unsubstituierten Alkenylgruppen mit 2 bis 30 Kohlenstoffatomen; V ein vierwertiger Vernetzer ist, ausgewählt aus der Gruppe bestehend aus substituierten oder unsubstituierten, gesättigten, ungesättigten oder aromatischen monocyclischen und polycyclischen Gruppen mit 5 bis 50 Kohlenstoffatomen, substituierten oder unsubstituierten Alkylgruppen mit 1 bis 30 Kohlenstoffatomen, substituierten oder unsubstituierten Alkenylgruppen mit 2 bis 30 Kohlenstoffatomen, und Kombinationen davon; jedes Auftreten von g unabhängig 2 bis 30 bedeutet; und d 2 bis 20 ist; und
wobei der Polyimid-Block die Struktur 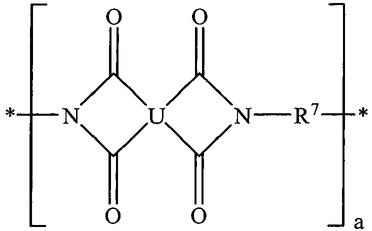 aufweist, wobei a 10 bis 1.000 ist; U ein vierwertiger Vernetzer ist, ausgewählt aus der Gruppe bestehend aus substituierten oder unsubstituierte, gesättigten, ungesättigten oder aromatischen monocyclischen und polycyclischen Gruppen mit 5 bis 50 Kohlenstoffatomen, substituierten oder unsubstituierten Alkylgruppen mit 1 bis 30 Kohlenstoffatomen, substituierten oder unsubstituiertented Alkenylgruppen mit 2 bis 30 Kohlenstoffatomen, und Kombinationen davon; und R⁷ unabhängig von jedem Auftreten eine zweiwertige Gruppe ist, ausgewählt aus der Gruppe bestehend aus substituierten oder unsubstituierten zweiwertigen aromatischen Kohlenwasserstoffresten mit 6 bis 20 Kohlenstoffatomen, gerad- oder verzweigt-kettigen Alkylenresten mit 2 bis 20 Kohlenstoffatomen, Cycloalkylenresten mit 3 bis 20 Kohlenstoffatomen, und zweiwertigen Resten der allgemeinen Formel 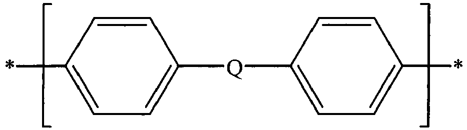 wobei Q ausgewählt ist aus der Gruppe bestehend aus -O-, -S-, -C(O)-, -S(O)₂-, -S(O)-, und -C_{y}H_{2y}-, wobei y 1 bis 20 ist.

8. Zusammensetzung nach Anspruch 7,
wobei R¹ und R⁶ unabhängig von jedem Auftreten Alkylengruppen mit 2 bis 6 Kohlenstoffatomen sind;
wobei R⁷ unabhängig von jedem Auftreten meta-Phenylen oder para-Phenylen ist;
wobei R², R³, R⁴, und R⁵ Methyl sind;
wobei U und V die Struktur 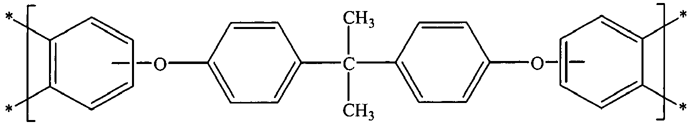 aufweisen; und wobei g unabhängig von jedem Auftreten 5 bis 15 ist.

9. Zusammensetzung nach irgendeinem der Ansprüche 1 bis 8, wobei das Polyimid-Polysiloxan-Block-Copolymer 0,4 bis 10 Gewichtsprozent Siloxangruppen zu der Zusammensetzung beiträgt.

10. Zusammensetzung nach irgendeinem der Ansprüche 1 bis 9, umfassend 1 bis 6 Gewichtsprozent Siloxan-Gruppen.

11. Zusammensetzung nach Anspruch 1,
wobei das Polyamid Polyamid-6,6 ist;
wobei die Polyamidmenge 42 bis 52 Gewichtsprozent beträgt;
wobei der Säure-funktionalisierte Poly(phenylenether) aus der Gruppe bestehend aus Säure-funktionalisierten Poly(2,6-dimethyl-1,4-phenylenether)n, Säure-funktionalisieren Poly(2,6-dimethyl-1,4-phenylenether)-Polysiloxan-Block-Copolymeren, und Kombinationen davon ausgewählt ist;
wobei die Menge Säure-funktionalisierter Poly(phenylenether) 28 bis 38 Gewichtsprozent beträgt;
wobei das Polyimid-Polysiloxan-Block-Copolymer einen Polysiloxan-Block mit der Struktur 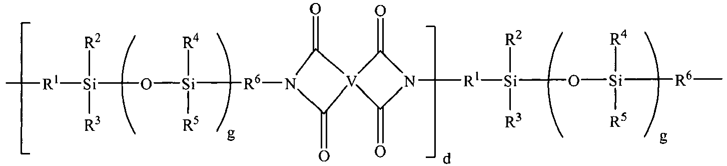 wobei g unabhängig von jedem Auftreten 5 bis 15 ist, und d 2 bis 20 ist; und einen Polyimid-Block mit der Struktur 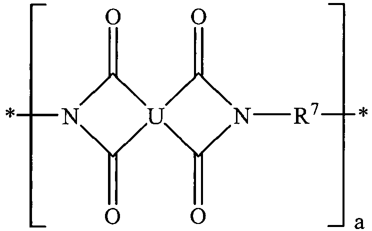 umfasst, wobei a 10 bis 1,000 ist; R¹ und R⁶ unabhängig von jedem Auftreten Alkylengruppen mit 2 bis 6 Kohlenstoffatomen sind; R⁷ unabhängig von jedem Auftreten meta-Phenylen oder para-Phenylen ist; R², R³, R⁴, und R⁵ Methyl sind; und U und V die Struktur 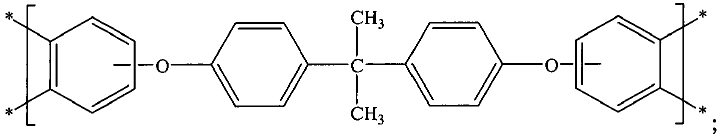 aufweisen, wobei die Polyimid-Polysiloxan-Block-Copolymer-Menge 5 bis 15 Gewichtsprozent beträgt; und
wobei die Metaldialkylphosphinat-Menge 3 bis 10 Gewichtsprozent beträgt.

12. Zusammensetzung nach Anspruch 11, wobei der Säure-funktionalisierte Poly(phenylenether) einen Säure-funktionalisierten Poly(2,6-dimethyl-1,4-phenylenether) umfasst.

13. Zusammensetzung nach Anspruch 11, wobei der Säure-funktionalisierte Polyphenylenether eine Kombination von einem Säure-funktionalisierten Poly(2,6-dimethyl-1,4-phenylenether) und einem Säure-funktionalisierten Poly(2,6-dimethyl-1,4-phenylenether)-Polysiloxan-Block-Copolymer ist.

14. Gegenstand, umfassend eine Zusammensetzung umfassend das Produkt des Schmelzmischens von:
40 bis 73 Gewichtsprozent Polyamid;
20 bis 50 Gewichtsprozent Säure-funktionalisierter Poly(phenylenether);
5 bis 40 Gewichtsprozent Polyimid-Polysiloxan-Block-Copolymer; und
2 bis 15 Gewichtsprozent Metalldialkylphosphinat;
wobei alle Gewichtsprozentangaben auf das Gesamtgewicht der Zusammensetzung bezogen sind.

15. Gegenstand nach Anspruch 14,
wobei das Polyamid Polyamid-6,6 ist;
wobei die Polyamidmenge 42 bis 52 Gewichtsprozent beträgt;
wobei der Säure-funktionalisierte Poly(phenylenether) aus der Gruppe bestehend aus Säure-funktionalisierten Poly(2,6-dimethyl-1,4-phenylenether)n, Säure-funktionalisieren Poly(2,6-dimethyl-1,4-phenylenether)-Polysiloxan-BlockCopolymeren, und Kombinationen davon ausgewählt ist;
wobei die Menge Säure-funktionalisierter Poly(phenylenether) 28 bis 38 Gewichtsprozent beträgt;
wobei das Polyimid-Polysiloxan-Block-Copolymer einen Polysiloxan-Block mit der Struktur 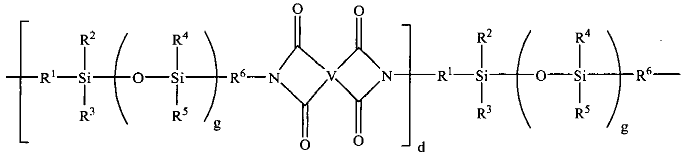 wobei g unabhängig von jedem Auftreten 5 bis 15 ist, und d 2 bis 20 ist; und einen Polyimid-Block mit der Struktur 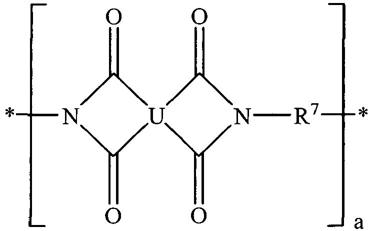 umfasst, wobei a 10 bis 1,000 ist; R¹ und R⁶ unabhängig von jedem Auftreten Alkylengruppen mit 2 bis 6 Kohlenstoffatomen sind; R⁷ unabhängig von jedem Auftreten meta-Phenylen oder para-Phenylen ist; R², R3, R⁴, und R⁵ Methyl sind; und U und V die Struktur 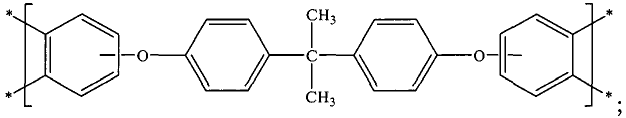 aufweisen, wobei die Polyimid-Polysiloxan-Block-Copolymer-Menge 5 to 15 Gewichtsprozent beträgt; und
wobei die Metaldialkylphosphinat-Menge 3 bis 10 Gewichtsprozent beträgt.

## Revendications

1. Composition comprenant le produit de la fusion à l'état fondu
de 40 à 73 % en poids d'un polyamide ;
de 20 à 50 % en poids d'un poly(phénylène éther) à fonctionnalité acide ;
de 5 à 40 % en poids d'un copolymère à blocs polyimide-polysiloxane ; et
de 2 à 15 % en poids d'un dialkylphosphinate métallique ; dans laquelle tous les pourcentages en poids sont rapportés au poids total de la composition.

2. Composition selon la revendication 1, dans laquelle le polyamide est choisi dans le groupe consistant en le polyamide-6, le polyamide-6,6, le polyamide-4,6, le polyamide-11, le polyamide-12, le polyamide-6,10, le polyamide-6,12, le polyamide 6/6,6, le polyamide-6/6,12, le polyamide MXD,6, le polyamide-6,T, le polyamide 6,I, le polyamide-6/6,T, le polyamide-6/6,I, le polyamide-6,6/6,T, le polyamide-6,6/6,I, le polyamide-6/6,T/6,I, le polyamide-6,6/6,T/6,I, le polyamide-6/12/6,T, le polyamide-6,6/12/6,T, le polyamide-6/12/6,I, le polyamide-6,6/12/6,I et les combinaisons de ceux-ci.

3. Composition selon la revendication 1 ou 2, dans laquelle le poly(phénylène éther) à fonctionnalité acide est le produit de la fusion à l'état fondu de 95 à 99,5 % en poids d'un poly(phénylène éther) avec 0,5 à 5 parties en poids d'un agent de fonctionnalisation acide choisi dans le groupe consistant en l'acide citrique, l'acide fumarique, l'acide maléique, l'anhydride maléique et les combinaisons de ceux-ci.

4. Composition selon la revendication 3, dans laquelle le poly(phénylène éther) comprend un homopolymère ou un copolymère de monomères choisis dans le groupe consistant en le 2,6-diméthylphénol, le 2,3,6-triméthylphénol et les combinaisons de ceux-ci.

5. Composition selon la revendication 3, dans laquelle le poly(phénylène éther) comprend un copolymère à blocs poly(phénylène éther)-polysiloxane.

6. Composition selon la revendication 5, dans laquelle le poly(phénylène éther) à fonctionnalité acide contribue à raison de 0,4 à 4 % en poids de groupes siloxane à la composition.

7. Composition selon l'une quelconque des revendications 1-6, dans laquelle le copolymère à blocs polyimide-polysiloxane comprend un bloc polyimide et un bloc polysiloxane ;
dans laquelle le bloc polysiloxane a la structure 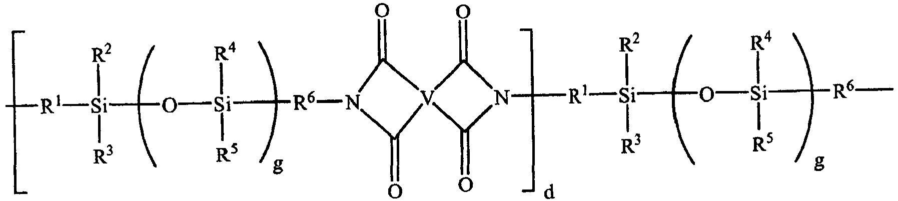 dans laquelle R¹ et R⁶ représentent chacun indépendamment de l'autre, à chaque occurrence, un groupe bivalent choisi dans le groupe consistant en les groupes monocycliques bivalents substitués ou non substitués, saturés, insaturés ou aromatiques, ayant 5 à 30 atomes de carbone, les groupes polycycliques bivalents substitués ou non substitués, saturés, insaturés ou aromatiques, ayant 5 à 30 atomes de carbone, les groupes alkylène substitués ou non substitués ayant 1 à 30 atomes de carbone, et les groupes alcénylène substitués ou non substitués ayant 2 à 30 atomes de carbone ; R², R³, R⁴ et R⁵ représentent chacun indépendamment des autres à chaque occurrence un groupe monovalent choisi dans le groupe consistant en les groupes monocycliques et monovalents substitués ou non substitués, saturés, insaturés ou aromatiques, ayant 5 à 30 atomes de carbone, les groupes polycycliques monovalents substitués ou non substitués, saturés, insaturés ou aromatiques, ayant 5 à 30 atomes de carbone, les groupes alkyle substitués ou non substitués ayant 1 à 30 atomes de carbone, et les groupes alcényle substitués ou non substitués ayant 2 à 30 atomes de carbone ; V est un groupe de liaison tétravalent choisi dans le groupe consistant en les groupes monocycliques ou polycycliques substitués ou non substitués, saturés, insaturés ou aromatiques, ayant 5 à 50 atomes de carbone, les groupes alkyle substitués ou non substitués ayant 1 à 30 atomes de carbone, les groupes alcényle substitués ou non substitués ayant 2 à 30 atomes de carbone, et les combinaisons de ceux-ci ; chaque occurrence de g représente d'une manière indépendante 2 à 30 ; et d vaut 2 à 20 ; et
dans laquelle le bloc polyimide a la structure 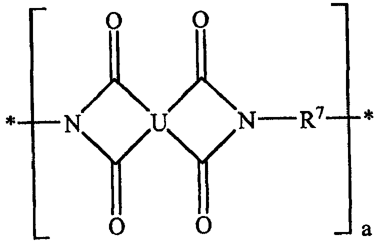 dans laquelle a vaut 10 à 1 000 ; U est un groupe de liaison tétravalent choisi dans le groupe consistant en les groupes monocycliques et polycycliques substitués ou non substitués, saturés, insaturés ou aromatiques, ayant 5 à 50 atomes de carbone, les groupes alkyle substitués ou non substitués ayant 1 à 30 atomes de carbone, les groupes alcényle substitués ou non substitués ayant 2 à 30 atomes de carbone, et les combinaisons de ceux-ci ; et R⁷ représente d'une manière indépendante à chaque occurrence un groupe bivalent choisi dans le groupe consistant en les fragments hydrocarbonés aromatiques bivalents saturés ou insaturés ayant 6 à 20 atomes de carbone, les fragments alkylène à chaîne droite ou ramifiée ayant 2 à 20 atomes de carbone, les fragments cycloalkylène ayant 3 à 20 atomes de carbone, et les fragments bivalents de formule générale 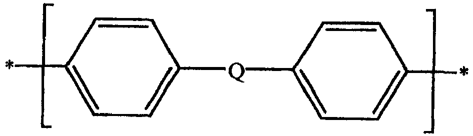 dans laquelle Q est choisi dans le groupe consistant en -O-, -S-, -C(O)-, -S(O)₂-, -S(O)-, et C_{y}H_{2y} où y vaut 1 à 20.

8. Composition selon la revendication 7,
dans laquelle R¹ et R⁶ représentent chacun indépendamment de l'autre à chaque occurrence un groupe alkylène ayant 2 à 6 atomes de carbone ;
dans laquelle R⁷ représente d'une manière indépendante à chaque occurrence le méta-phénylène ou le paraphénylène ;
dans laquelle R², R³, R⁴ et R⁵ sont des groupes méthyle ; dans laquelle U et V ont la structure 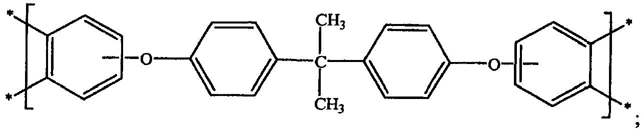 et
dans laquelle g représente d'une manière indépendante à chaque occurrence 5 à 15.

9. Composition selon l'une quelconque des revendications 1 à 8, dans laquelle le copolymère à blocs polyimide-polysiloxane contribue à raison de 0,4 à 10 % en poids de groupes siloxane à la composition.

10. Composition selon l'une quelconque des revendications 1 à 9, comprenant 1 à 6 % en poids de groupes siloxane.

11. Composition selon la revendication 1,
dans laquelle le polyamide est le polyamide-6,6 ;
dans laquelle la quantité du polyamide est de 42 à 52 % en poids ;
dans laquelle le poly(phénylène éther) à fonctionnalité acide est choisi dans le groupe consistant en les poly(2,6-diméthyl-1,4-phénylène éthers) à fonctionnalité acide, les copolymères à blocs poly(2,6-diméthyl-1,4-phénylène éther) à fonctionnalité acide-polysiloxane, et les combinaisons de ceux-ci ;
dans laquelle la quantité du poly(phénylène éther) à fonctionnalité acide est de 28 à 38 % en poids ;
dans laquelle le copolymère à blocs polyimide-polysiloxane comprend un bloc polysiloxane ayant la structure 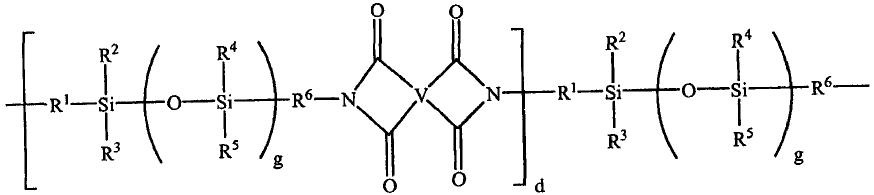 dans laquelle g représente d'une manière indépendante à chaque occurrence 5 à 15, et d vaut 2 à 20 ; et un bloc polyimide ayant la structure 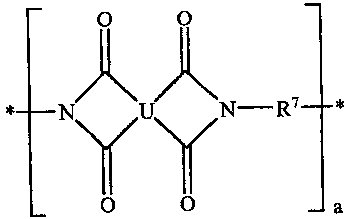 dans laquelle a vaut 10 à 1 000 ; R¹ et R⁶ représentent chacun indépendamment de l'autre à chaque occurrence un groupe alkylène ayant 2 à 6 atomes de carbone ; R⁷ représente d'une manière indépendante à chaque occurrence le méta-phénylène ou le para-phénylène ; R², R³, R⁴ et R⁵ sont des groupes méthyle ; et U et V ont la structure 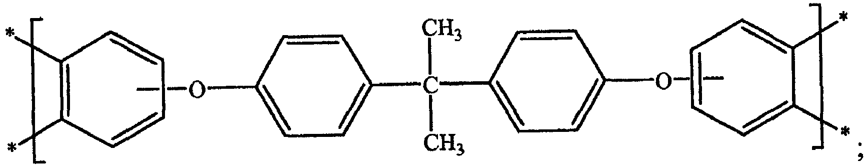 dans laquelle la quantité du copolymère à blocs polyimide-polysiloxane est de 5 à 15 % en poids ; et
dans laquelle la quantité du dialkylphosphinate métallique est de 3 à 10 % en poids.

12. Composition selon la revendication 11, dans laquelle le poly(phénylène éther) à fonctionnalité acide comprend un poly(2,6-diméthyl-1,4-pénylène éther) à fonctionnalité acide.

13. Composition selon la revendication 11, dans laquelle le poly(phénylène éther) à fonctionnalité acide est une combinaison d'un poly(2,6-diméthyl-1,4-phénylène éther) à fonctionnalité acide et d'un copolymère à blocs poly(2,6-diméthyl-1,4-phénylène éther) à fonctionnalité acide-polysiloxane.

14. Article comprenant une composition comprenant le produit de la fusion à l'état fondu
de 40 à 73 % en poids d'un polyamide ;
de 20 à 50 % en poids d'un poly(phénylène éther) à fonctionnalité acide ;
de 5 à 40 % en poids d'un copolymère à blocs polyimide-polysiloxane ; et
de 2 à 15 % en poids d'un dialkylphosphinate métallique ; dans lequel tous les pourcentages en poids sont rapportés au poids total de la composition.

15. Article selon la revendication 14,
dans lequel le polyamide est le polyamide-6,6 ;
dans lequel la quantité du polyamide est de 42 à 52 % en poids ;
dans lequel le poly(phénylène éther) à fonctionnalité acide est choisi dans le groupe consistant en les poly(2,6-diméthyl-1,4-phénylène éthers) à fonctionnalité acide, les copolymères à blocs poly(2,6-diméthyl-1,4-phénylène éther) à fonctionnalité acide-polysiloxane, et les combinaisons de ceux-ci ;
dans lequel la quantité du poly(phénylène éther) à fonctionnalité acide est de 28 à 38 % en poids ;
dans lequel le copolymère à blocs polyimide-polysiloxane comprend un bloc polysiloxane ayant la structure 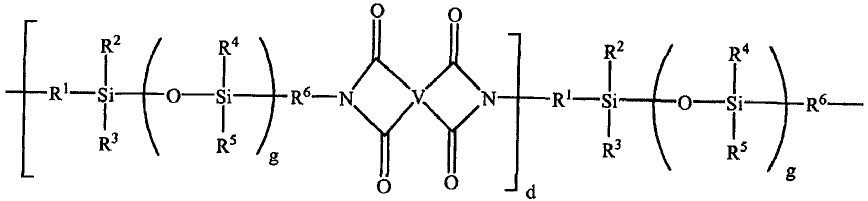 dans laquelle g représente d'une manière indépendante à chaque occurrence 5 à 15, et d vaut 2 à 20 ; et un bloc polyimide ayant la structure 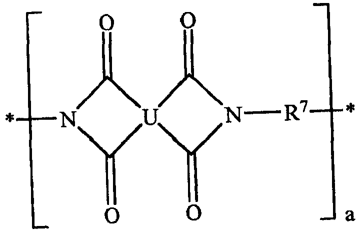 dans laquelle a vaut 10 à 1 000 ; R¹ et R⁶ représentent chacun indépendamment de l'autre à chaque occurrence un groupe alkylène ayant 2 à 6 atomes de carbone ; R⁷ représente d'une manière indépendante à chaque occurrence le méta-phénylène ou le para-phénylène ; R², R³, R⁴ et R⁵ sont des groupes méthyle ; et U et V ont la structure 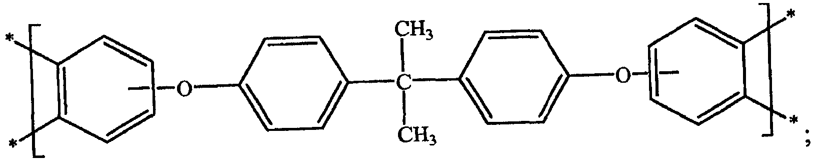 dans laquelle la quantité du copolymère à blocs polyimide-polysiloxane est de 5 à 15 % en poids ; et
dans laquelle la quantité du dialkylphosphinate métallique est de 3 à 10 % en poids.
